(19) Europäisches Patentamt

European Patent Office

Office européen des brevets

(11) EP 1 116 188 B1

(12) EUROPEAN PATENT SPECIFICATION

(45) Date of publication and mention
of the grant of the patent:
23.03.2005 Bulletin 2005/12

(51) Int Cl.7: G06T 15/50

(21) Application number: 99947695.5

(86) International application number:
PCT/GB1999/003229

(22) Date of filing: 29.09.1999

(87) International publication number:
WO 2000/019379 (06.04.2000 Gazette 2000/14)

(54) **ENERGY PROPAGATION MODELLING APPARATUS**

VERFAHREN ZUR ENERGIEÜBERTRAGUNGSMODELLIERUNG

APPAREIL DE MODELISATION DE PROPAGATION D'ENERGIE

(84) Designated Contracting States:
AT BE CH CY DE DK ES FI FR GB GR IE IT LI LU
MC NL PT SE

(30) Priority: 29.09.1998 GB 9821139
06.07.1999 GB 9915838

(43) Date of publication of application:
18.07.2001 Bulletin 2001/29

(73) Proprietor: UNIVERSITY COLLEGE LONDON
London WC1E 6BT (GB)

(72) Inventor: SLATER, Mel
Ilford, Essex IG1 3HH (GB)

(74) Representative:
Beresford, Keith Denis Lewis et al
BERESFORD & Co.
16 High Holborn
London WC1V 6BX (GB)

(56) References cited:
EP-A- 0 610 004        EP-B- 0 795 164
US-A- 5 313 568        US-A- 5 488 700
US-A- 5 729 672

• L. NEUMANN ET AL.: "Radiosity with Well
Distributed Ray Sets" THE INTERNATIONAL
JOURNAL OF THE EUROGRAPHICS
ASSOCIATION, COMPUTER GRAPHICS
FORUM, vol. 16, no. 3, 4 - 8 September 1997,
pages C261-C269, XP000870207 Budapest
• LEVOY M ET AL: "LIGHT FIELD RENDERING"
COMPUTER GRAPHICS PROCEEDINGS
(SIGGRAPH),US,NEW YORK, NY: ACM, 4 August
1996 (1996-08-04), page 31-42 XP000682719
cited in the application
• NG A: "Assessment of five radiosity acceleration
techniques" COMPUTERS AND
GRAPHICS,GB,PERGAMON PRESS LTD.
OXFORD, vol. 19, no. 5, September 1995
(1995-09) - October 1995 (1995-10), page 727-738
XP004000246 ISSN: 0097-8493
• NEUMANN L ET AL: "RADIOSITY AND HYBRID
METHODS" ACM TRANSACTIONS ON
GRAPHICS,US,ASSOCIATION FOR
COMPUTING MACHINERY, NEW YORK, vol. 14,
no. 3, July 1995 (1995-07), page 233-265
XP000554501 ISSN: 0730-0301
• GORTLER S J ET AL: "THE LUMIGRAPH"
COMPUTER GRAPHICS PROCEEDINGS
(SIGGRAPH),US,NEW YORK, NY: ACM, 4 August
1996 (1996-08-04), page 43-54 XP000682720
cited in the application

**Description**

The present invention is concerned with apparatus for modelling the propagation of energy. In particular, the present invention is concerned with the modelling of propagation which can be represented by ray paths, and the manner in which energy passes along ray paths while interacting with objects in a modelled scene. The present invention has applications for example in the modelling of light in a scene, to provide a facility for production of near photo-realistic images of a globally illuminated scene or to provide for measurement of light or other energy distribution within a scene.

In many computer games, dynamic imagery is of real importance, and so real-time production of dynamic images is implemented to the detriment of photo-realism. On the other hand, many applications such as architectural design do not require substantial dynamic changes to an image in real-time, whereas photo-realism is of real importance.

However, even in a photo-realistic model, it is preferable that a user can change the viewpoint of a computer modelled scene, with limited re-calculation. An ideal technique, for carrying this out without significant re-calculation, is known as a "view-independent" technique. View-independence in this sense means that data pertaining to the scene does not require new lighting calculations on variation of the point of view of the scene.

In order to model a scene in a photo-realistic manner, the true reflective and transmissive properties of light incident on objects in the scene must be approximated. In particular, the reflection and transmission of light must be modelled so as to approximate to the behaviour of light in real life. In that way, the observer of the modelled scene will reach the correct conclusions concerning the nature and appearance of objects within the scene.

Light within a scene has in the past been modelled by several techniques, most of which can be categorised as either "ray tracing" techniques or "radiosity" techniques.

Ray tracing is described in detail in "An Improved Illumination Model for Shaded Display" by T. Whitted, published in COMM.AMC 23(6), 343-349, June 1980. Ray tracing assumes that the observer is viewing an image projected through a pin-hole camera, on to an image plane. The image is of a scene illuminated by point light sources. For ease of calculation, the medium through which light is transmitted is usually assumed to be non-participating, but light attenuation effects can be modelled as described in "Computer Graphics, Principles and Practice" by Foley, van Dam, Feiner, Hughes, 2nd ed. (hereinafter referred to as "Foley") pages 727 and 728.

Rays are traced from the pin-hole or centre of projection (COP) through the image plane and into the scene, bouncing from object to object using the laws of specular reflection (angle of reflection equals angle of incidence, incident and reflected rays are co-planar), until the ray exits the scene or it is established that further reflections will make negligible contribution to the image to be displayed on the computer screen because the intensity of further reflected rays is negligible. In practice, when considering a scene including transparent or translucent objects, transmission of light is considered in the same way as reflection, using well-known physical laws.

Ray tracing is entirely view-dependent. That means that if a different viewpoint is selected, the transmission of light towards the viewpoint from the scene must be entirely re-calculated. Moreover, it is not suitable for modelling diffuse reflection, where a particular incident ray results in a plurality of reflected ray directions, and a particular reflected ray can be the result of a plurality of incident rays. It is therefore impossible to represent diffuse reflection realistically using ray tracing.

Radiosity techniques are discussed in the paper "Modelling the interaction of light between diffuse surfaces" by C M Goral et al, published in Computer Graphics (SIGGRAPH 84), 213-222. Radiosity techniques are suitable for scenes where all materials are ideal diffuse reflectors. However, radiosity is not suitable for consideration of specular reflection. Radiosity is defined as the rate at which light energy leaves a surface.

Almost all radiosity methods rely on a scene to be modelled being described in terms of polygons. Each polygon can be further sub-divided into small patches. The patches may in turn be sub-divided into surface elements. Each patch (or surface element as the case may be) is considered in turn, and the radiosity at that patch is calculated from the radiosity of patches from which light can be transmitted to the patch in question, taking into account their relative position and angular orientations. It should be appreciated that radiosity techniques cannot be used for point light sources, since a light source must be capable of description in terms of polygons defining the geometry of the light source.

Once the radiosity at each patch has been calculated, Gouraud shading can be employed to produce a smooth image. Gouraud shading is described in Foley, pp 736 and 737. Since patches of finite area are considered instead of points on a surface, radiosity will not result in accurate consideration of specular reflection. However, the lack of specular reflective effects means that the lighting of a model considered through radiosity techniques is independent of the position of the viewpoint of the model. That is, recalculation of the whole image need not take place in the event that the position of the viewpoint changes.

As a result, a radiosity model is suitable to be viewed from a dynamic viewpoint in real time. This is known as "real-time walk-through". This is highly suitable for CAD applications such as for architectural models, but the loss of specular reflection results in a loss in photo-realism. It should be appreciated that significant recalculation will be necessary at every change of view due to the need to determine visible surfaces and to apply interpolative shading.

Finally, a rendering technique proposed on the one-hand by Levoy and Hanrahan in a paper published in Computer Graphics (SIGGRAPH), Annual Conference Series (1996), 31-42, and on the other-hand by Gortler et al in Computer Graphics (SIGGRAPH), Annual Conference Series (1996), 43-52, does not fall within the scope of either ray tracing or radiosity methods.

In both disclosures, a system implementing a "light field" or "lumigraph" is described. The light field is constructed of an ordered plurality of rays constructed between two parallel planes. Other light fields can be constructed using different arrangements of construction planes. The rays are arranged between discrete points on the planes, and can be described in terms of the points on the two planes between which they extend. A scene consisting of one or more objects can be rendered into the light field, by considering views of the scene at each point on the two planes. Those views can either be constructed by one of the techniques identified above, or by importing real views of a scene produced on digital cameras. The radiance propagated along each ray from a particular point constructing the light field can be identified from the view from that point constructed or imported by the system.

Once the radiances associated with rays from each point have been identified, views of the scene from a point within the light field can be constructed by considering the radiance of rays passing near that point and interpolating an image from the radiance values obtained.

Real images of real objects can be rendered into the light field, so that images from positions other than the positions from which images were obtained by a camera can also be seen. These real images can be generated by means of a digital camera, taking digital photographs from a plurality of different positions about the scene to be rendered into the light field.

However, the light field technique described above has a significant disadvantage, in that views cannot be constructed from every position in the light field. If a scene consists of a plurality of objects, or at least one object which has at least one concave surface, then a volume can be defined, between a surface bounding a minimum volume about the scene which includes no concave surfaces (the "convex hull" of the scene) and the actual surface(s) defining the object(s) of the scene. Several rays within this volume are bounded at both ends by surfaces of objects in the scene. Therefore, radiances along those rays cannot be determined from consideration of real images at points on the two constructing planes. As a result, discontinuities exist which prevent construction of images from a sub-set of all viewpoints within the volume.

It is an object of the present invention to provide an alternative technique for modelling energy propagation, such as the propagation of light through a scene.

The invention provides simulation apparatus which defines discrete paths within an environment within which energy propagation is to be modelled, and which locates points along those paths which denote interactions of objects within the environment with the paths.

One aspect of the present invention provides a technique which allows specular and diffuse reflection to be represented realistically. A scene, and light propagation within the scene, can be represented by the present invention such that an image of the scene from a particular viewpoint can be generated in substantially constant time. The constant time is not dependent on the complexity of the scene to be represented and, with the provision of sufficient computer power, is capable of being made significantly small that real time changes of viewpoint can be represented.

According to one aspect, the present invention provides a computer apparatus for processing data to model energy propagation within a three dimensional scene, the apparatus comprising: means for defining a three dimensional environment for containing the three dimensional scene; means for defining a plurality of predetermined discrete energy propagation pathways in a plurality of directions within the defined three dimensional environment, which pathways are independent of any defined energy receiver; means for creating the three dimensional scene within the three dimensional environment by locating objects and energy sources within said three dimensional environment; means for determining intersections between said predetermined pathways and said objects and energy sources within said three dimensional environment; means for calculating propagation of energy along said predetermined pathways in accordance with said objects and energy sources and the intersections determined by said determining means; means for defining an energy receiver within said three dimensional environment; means for identifying which of said predetermined pathways intersect said energy receiver; and means for calculating energy received by said energy receiver within said three dimensional environment in accordance with the calculated energy propagation along the identified predetermined pathways which intersect said energy receiver.

According to another aspect, the present invention provides a method of processing data to model energy propagation within a three dimensional scene, the method comprising the steps of: defining a three dimensional environment, for containing the three dimensional scene; defining a plurality of predetermined discrete energy propagation pathways in a plurality of directions within the defined three dimensional environment, which pathways are independent of any defined energy receiver; creating the three dimensional scene within the three dimensional environment by locating objects and energy sources within said three dimensional environment; determining intersections between said predetermined pathways and said objects and energy sources; calculating data defining the propagation of energy along said predetermined pathways in accordance with said objects and energy sources and the intersections determined by said determining means; defining an energy receiver at a position in said three dimensional environment; identifying which of said predetermined pathways intersect said energy receiver; and calculating energy received by said energy receiver in accordance with the calculated energy propagation along the identified predetermined pathways which intersect said energy receiver.

Further features and advantages of the invention will become apparent from the following description of apparatus and a method in accordance with a preferred and specific embodiment of the invention, with reference to the accompanying drawings in which:

Figure 1 is a schematic diagram of image processing apparatus in accordance with a specific embodiment of the invention;

Figure 2A is a perspective view of a scene to be modeled by the image processing apparatus of Figure 1, including illustration of ray directions encountered at a first viewpoint;

Figure 2B is a perspective view of the scene illustrated in Figure 2A, including illustration of ray directions encountered at a second viewpoint;

Figure 3A is a perspective view of a parallel sub-field in accordance with a specific embodiment of the present invention;

Figure 3B is a perspective view of a further parallel sub-field in accordance with a specific embodiment of the present invention;

Figure 3C is a perspective view of a still further parallel sub-field in accordance with a specific embodiment of the present invention;

Figure 4 is a perspective view of the scene illustrated in Figures 2A and 2B, including illustration of a selected plane within the scene to be modelled and a selected ray within that plane in accordance with the specific embodiment of the present invention;

Figure 5 is an elevation of the construction plane illustrated in Figure 4 in a direction normal to the construction plane, in accordance with the specific embodiment of the present invention;

Figure 6 is a schematic diagram illustrating intersections of objects with the light ray illustrated in Figure 4, throughout its length;

Figure 7 is a schematic diagram showing an extract of the length of the light ray, between the side walls of the scene illustrated in Figure 4;

Figure 8 is a schematic diagram showing the structure of interval data in accordance with the specific embodiment of the present invention;

Figure 9 is a schematic diagram of a data structure for the interval data illustrated in Figure 8;

Figure 10 is an elevation similar to that illustrated in Figure 5, including a representation of a virtual eye for viewing the scene;

Figure 11 is a schematic diagram showing the structure of the image processing apparatus illustrated in Figure 1;

Figure 12 is a schematic diagram showing the structure of the L F computation unit illustrated in Figure 11;

Figure 13 is a schematic diagram showing the internal structure of the viewer illustrated in Figure 11;

Figure 14 is a flow diagram illustrating the procedure performed by the image processing apparatus in use;

Figures 15 to 20 are flow diagrams illustrating sub-procedures called by the procedure illustrated in Figure 14;

Figure 21 is a flow diagram illustrating a procedure according to which the viewer operates in use;

Figure 22 is a flow diagram illustrating a procedure by which the image processing apparatus is operative to delete an object from a scene;

Figure 23 is a flow diagram illustrating a procedure by which the image processing apparatus is operative to add an object to a scene;

Figure 24 is a schematic diagram of an object in a light field demonstrating the potential for computational complexity in considering diffuse reflection;

Figure 25 is a schematic diagram showing a portion of the surface of the object illustrated in Figure 24, illustrating a gathering step of a method of reducing computational complexity;

Figure 26 is a diagram of the portion of the object surface illustrated in Figure 25, demonstrating a "shooting" step of the method of reducing computational complexity;

Figure 27 is a view of the object illustrated in Figure 24, demonstrating a further method of reducing the computational complexity of considering diffuse reflection;

Figure 28 is a schematic diagram of image processing apparatus for defining an environment in virtual reality, in accordance with the specific embodiment of the invention;

Figure 29 is a side view of a head mounted display for use in the apparatus illustrated in Figure 28; and

Figure 30 is a view of the display apparatus of the head mounted display illustrated in Figure 29.

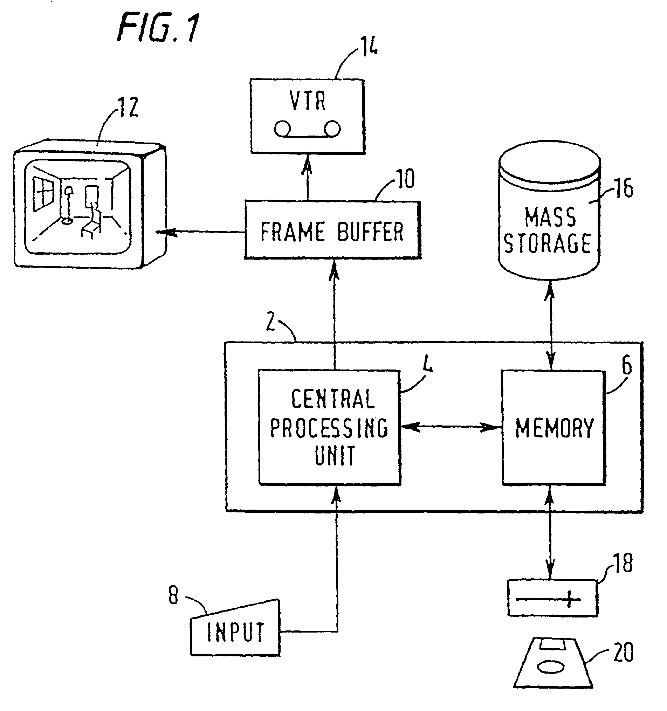

Figure 1 is a block diagram showing the general arrangement of an image processing apparatus according to an embodiment of the invention. In the apparatus, there is provided a computer 2, which comprises a central processing unit (CPU) 4 connected to a memory 6 operable to store a program defining the sequence of operations of the CPU 4 and to store object and image data used in calculations by the CPU 4.

An input device 8 is coupled to an input port (not shown) of the CPU 4. The input device 8 may comprise, for example, a keyboard and/or a position sensitive input device such as a mouse, tracker ball, or a digitizer tablet and stylus etc.

A frame buffer 10 is also coupled to the CPU 4, the frame buffer 10 comprising a memory unit (not shown) arranged to store image data relating to at least one image, for example by providing one (or several) memory location (s) per pixel of the image. The value(s) stored in the frame buffer 10 for each pixel defines the colour or intensity of that pixel in the image.

In the present embodiment of the invention, an image is represented as a two-dimensional array of pixels, which can conveniently be described in terms of Cartesian coordinates. The position of the given pixel can be described by a pair of x, y co-ordinates. The frame buffer 10 has sufficient memory capacity to store at least one image. If the image has a resolution of 1000 by 1000 pixels, the frame buffer 10 should include $10^6$ pixel locations, each location being addressable directly or indirectly in terms of pixel co-ordinates x, y.

A video display unit (VDU) 12 is coupled to the frame buffer 10. The VDU 12 is operable to display the image stored in the frame buffer 10 in a conventional manner.

For instance, if the VDU 12 displays images in a raster scanning manner, the x co-ordinate of a pixel maps to the distance along a line of the scanned display, and the y co-ordinate of the pixel maps to the number of the line.

Also coupled to the frame buffer 10 is a video tape recorder (VTR) 14 adapted to receive a video tape 15. Another image recording device, such as a paper printer, a 35mm film recorder or a recordable compact disc could be provided in addition or in the alternative.

A mass storage device 16, such as a hard-disk drive, is coupled to the memory 6. The mass storage device 16 has a high data storage capacity, suitable for storing data to which instant access is not required. Moreover, a disk drive 18, operable to accept removable data storage media such as a floppy disk 20 is coupled to the memory 6. The disk drive 18 is operable to transfer data stored on the floppy disk 20 to the memory 6.

The apparatus is programmable through program instructions introduced on a storage medium, such as a floppy disk 20. Alternatively, an optical disk reader could be provided to receive an optical disk, such as in CD-ROM or DVD format. Further, the apparatus could include a modem, to receive a signal bearing program instructions. The program instructions could also be introduced by typing at the keyboard of the input device 8.

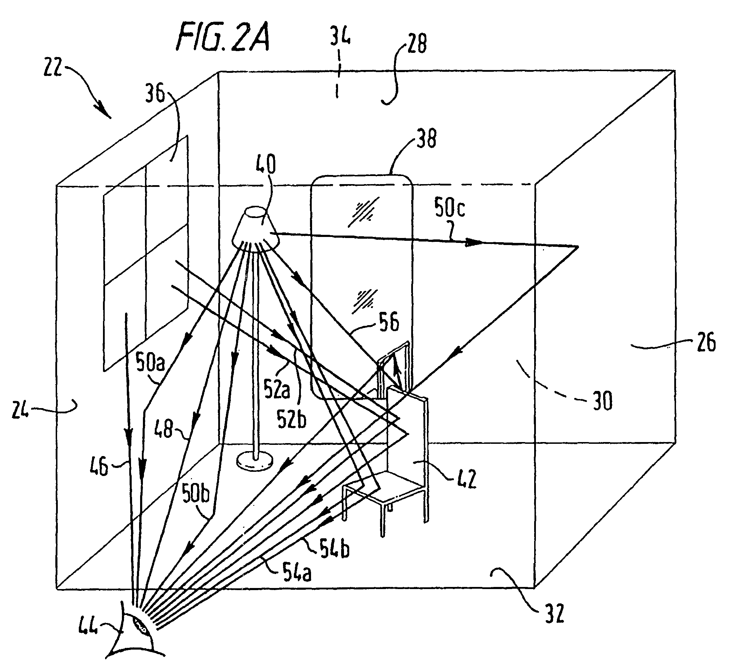

Figure 2A illustrates a scene 22 in respect of which it would be desirable to model light propagation using the apparatus of the embodiment of the invention described herein. The scene 22 consists of a room bounded by left and right side walls 24, 26, back and front walls 28, 30, a floor 32 and a ceiling 34. The front wall 30 and the ceiling 34 are shown as transparent in Figure 2A for reasons of clarity. The walls, floor and ceiling together define a room which, in this embodiment, is substantially cubic in shape.

A window 36 is set in the left-hand side wall 24, and a rectangular mirror 38 is mounted on the back wall 28. A free-standing lamp 40 stands on the floor 32, in the corner defined by the left-hand side wall 24 and the back wall 28. A chair 42 is situated substantially in the centre of the floor 32. The chair 42 is oriented in the room such that its back is substantially parallel with a line constructed between the back left corner of the room and the front right corner of the room.

In Figure 2A, an eye 44 is placed at a viewpoint at the front of the scene 22. As is well-known from conventional optics, light enters the eye 44 and is refracted by various elements of the eye 44, to allow a focused image to be formed on the retina.

In the scene 22, rays of light travel in an infinite number of directions. However, only those rays which enter the pupil of the eye 44 are experienced by the observer. For example, a ray 46 is shown travelling from the window 36 (transmitting light from a theoretically infinitely distant light source), directly to the eye 44. Another ray 48 is shown travelling directly from the lamp 40 to the eye 44.

However, a substantial amount of light will not reach the eye 44 directly from light sources, but will be reflected off objects within the scene 22. For example, light radiated from the lamp 40 will hit the left-hand wall 24, the floor 32 and the right-hand wall 26, and be reflected towards the eye 44. Rays 50a, 50b, 50c respectively illustrate these three circumstances. It will be understood that light radiated from the lamp will also be reflected towards the eye from the back wall 28, the front wall 32 and the ceiling 34, but rays corresponding to those paths are omitted from Figure 2A for reasons of clarity.

Moreover, rays 52a, 52b in Figure 2A represent light travelling from the window 36 to the eye 44 via a reflection off the back of the chair 42. Rays 54a, 54b represent light travelling from the lamp 40 to the eye 44 via a reflection off the seat of the chair 42.

The walls, floor and ceiling 24-34 and the chair 42 have diffusely reflecting surfaces. Consequently, a ray of light incident on one of those objects will reflect in all directions forming an acute angle with the surface normal at the point of incidence. Unit vectors representing those directions define a hemispherical volume of unit radius, with centre at the point of incidence, and bounded by a plane tangential to the surface of the object at the point of incidence.

As a result, an observer of light reflected at one of the objects with diffusely reflective surfaces will see a representation of the object in question. The observer will not see a sharp reflected image of the ultimate source of the reflected light. Also, some of the light incident on each of these objects will be absorbed thereby. The rate of absorption is normally frequency dependent, and the absorption is associated with interpretation by the observer of colour of the object in question.

In contrast, the ray 56 illustrated in Figure 2A, which is firstly diffusely reflected from the back of the chair 42 towards the mirror 38, is then specularly reflected from the mirror towards the eye 44. Specular reflection is that which behaves in accordance with the ideal laws of reflection, as described in the introduction above. By observing other rays which similarly diffusely reflect from the various objects in the scene to the mirror and then to the eye, a reflected image of the scene is formed in the eye.

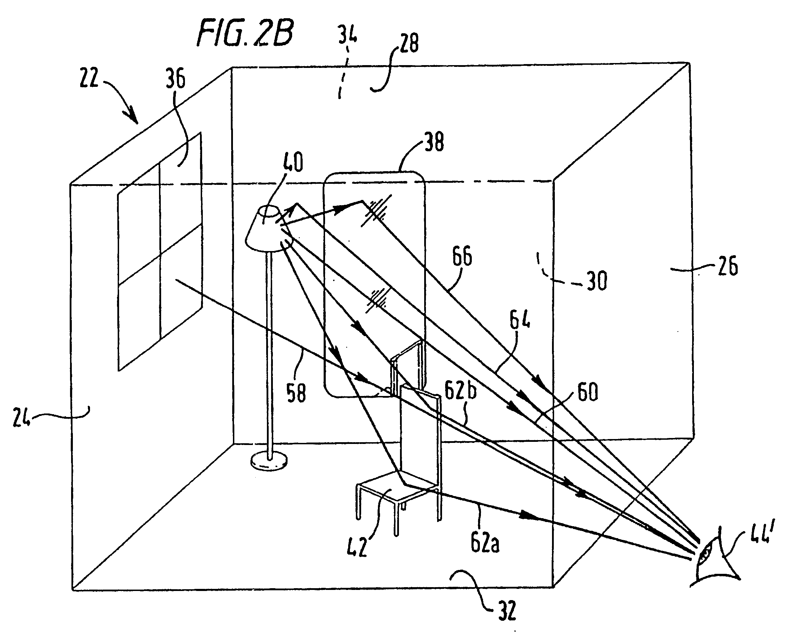

Referring now to Figure 2B, the same scene 22 is illustrated, with the eye of the observer in a new position. The eye is now referenced with the numeral 44'. The objects within the scene 22 described above are given the same reference numerals as before, in view of the fact that they are unchanged. However, the scene 22 is now being viewed from a different position, and so different rays of light will enter the eye 44'. For example, a ray 58 travels directly from the window 36 to the eye 44', and a ray 60 travels directly from the lamp 40 to the eye 44'. Furthermore, rays 62a, 62b travel from the lamp 40 via diffuse reflection off the chair 42 to enter the eye 44'. A ray 64 will travel from the lamp 40, diffusely reflect from the back wall 28, and enter the eye 44'. A ray 66 from the lamp 40 will specularly reflect from the mirror 38 and enter the eye 44'. That ray 66 is representative of rays from the lamp which reflect from the mirror 38, which will contribute to the construction of a reflected image of the lamp within the eye.

From the foregoing description of the two views of the same scene, it will be seen that in order to observe the same scene from two different views, one must obtain information concerning the radiance of light associated with two different sets of rays.

In the real world, light exists independently of a viewer, and behaves in accordance with physical laws such as concerning reflection, refraction and diffraction. Where a view of a scene is observed in the real world, those rays which enter the aperture of a viewer are taken into consideration, and focused to produce an image. The preferred embodiment of the present invention aims to emulate that situation, by modelling a complete pattern of light behaviour within a scene, without reference to a particular viewpoint.

This objective is not achievable in practice, because any scene contains an infinite number of potential light propagation directions. Therefore, the embodiment models a light field consisting of a finite number of potential carriers of light radiance, referred to hereinafter as "rays".

Thereafter, objects can be rendered into the light field by considering the intersections of the rays in the light field with the objects. Once all objects have been rendered into the light field, light can be propagated along the rays from objects designated as light emitters, and interactions such as reflections, refractions and detractions can be computed at the intersections of the rays with the objects.

The embodiment is significantly different from the techniques described by Levoy and Hanrahan and Gortler et al, both of which are directed to the construction of a 3D representation of a scene from 2D images. In contrast, the preferred embodiment described herein is concerned primarily with the behaviour of light within the light field, and considers the characteristics of the objects rendered into the light field only when calculating interactions at intersections.

Series of 2D images need not be stored with the present invention; a final image at a particular viewpoint in the light field can be constructed in a straightforward manner.

Various different light fields could be defined, but a preferred light field consists of a plurality of parallel sub-fields. Each parallel sub-field consists of a light region, of cuboid shape, between two opposite sides of which extend a plurality of parallel rays. The parallel rays are arranged in a grid to enable straightforward referencing thereof. The centre of each parallel sub-field is defined as its origin, and the parallel sub-fields are overlaid so that their origins coincide. The parallel sub-fields are oriented in different directions in relation to each other, so that a light field is constructed which includes rays offset across a region, and oriented in a variety of directions in three-dimensional space.

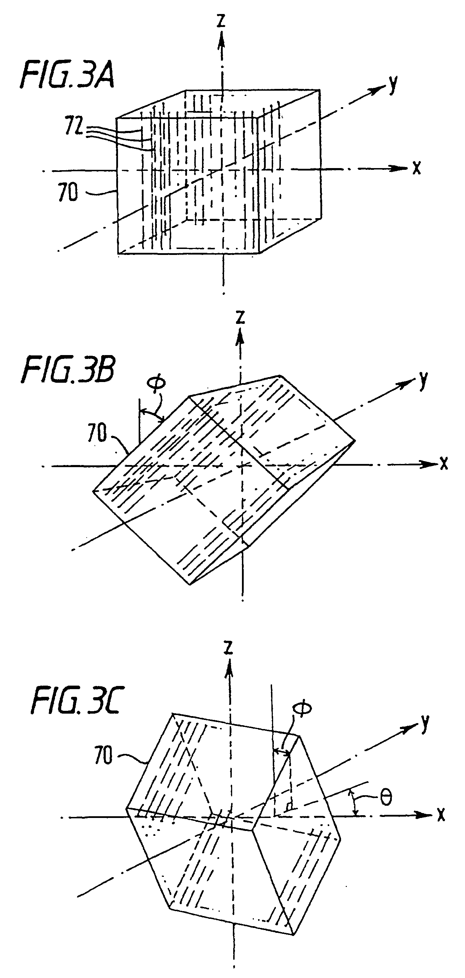

With reference now to Figure 3A, a parallel sub-field 70 comprises a cubic volume in x, y, z Cartesian space defined by:

$$-1 \leq x \leq 1$$

$$-1 \leq y \leq 1$$

$$-1 \leq z \leq 1$$

A rectangular grid is imposed on the x, y plane comprising n sub-divisions of equal width in each of the x and y directions. The width of each sub-division in each of the x and y directions is 2/n. The value of n is defined by reference to the level of resolution of final images generated in the apparatus which would be acceptable, and the amount of data storage of the apparatus, in particular the mass storage unit 16 thereof. In this embodiment, n is set at 200.

Discrete co-ordinates (i, j) are assigned to the centre of these sub-divisions, imposing a discrete co-ordinate grid on the x, y plane within the parallel sub-field 70. The grid is referenced by co-ordinates (i, j). The real co-ordinate on the x, y plane corresponding to (i, j) is therefore:

$$(x_i, y_j) = \left( \frac{2i+1}{n} - 1, \frac{2j+1}{n} - 1 \right); \; i=0,1,\ldots n-1; \; j=0,1\ldots n-1$$

Each grid reference has associated therewith a ray 72 parallel with the z axis and spanning the cubic volume. Therefore there are n x n rays, defined in terms of coordinates (i, j), each of which co-ordinates range between 0 and n-1.

In that way, a parallel sub-field 70 is defined which contains a plurality of rays 72 in the vertical direction, which can be used to model light travelling in either direction along each ray in that set of rays.

With reference to Figure 3B, the cubic volume 70 previously described is illustrated rotated through an angle $\phi$ from the vertical about the y axis. No rotation is imparted about the Z axis. In that way, each ray of the n x n array of rays 72 is oriented at an angle $\phi$ from the vertical. Also, each ray lies in a plane parallel with the x, z plane.

Figure 3C illustrates the cubic volume containing the array of rays further rotated through an angle $\theta$ about the z axis. In that way, each of the rays of the n x n array is oriented at an angle $\phi$ from the vertical and, when resolved into the x, y plane, is at an angle $\theta$ relative the x axis.

All possible directions of rays can be described using the following ranges:

$\phi = 0$ ; $\theta$ : don't care
$0\langle\phi\langle\pi/2$ ; $0\leq\theta\langle2\pi$
$\phi=\pi/2$ ; $0\leq\theta\langle\pi$

It should be noted that at $\phi = 0$, the direction of the rays 72 is independent of the value of $\theta$, and that at $\phi = \pi/2$, $\theta$ need only pass through a half revolution in order to cover all possible directions.

In order to implement the arrangement on a computer, $\theta$ and $\phi$ must be discretised. Two alternative methods of discretising $\phi$ and $\theta$ will now be described.

In a first method, R is a predetermined number of sub-divisions of $2\pi$, representing the level of resolution which the apparatus is to use. In this embodiment, R is set such that the total number of different directions is around 6000. Then, defining the discretised variables u, v corresponding to continuous variables $\theta$, $\phi$:

$$\theta=u\ \frac{2\pi}{R},\ u=0,1,...R\text{-}1$$

$$\phi=v\ \frac{2\pi}{R},\ v=0,1...\ \frac{R}{4}$$

Therefore, by substituting these equations into the range definitions of $\phi$ and $\theta$ and making u, v the subject thereof, the ranges of values which u and v can take are as follows:

v = 0; u : don't care
v = 1,2...(R/4)-1; u = 0,1...R-1
v = R/4; u = 0,1,...(R/2)-1

Since the above formulae refer to the quantity R/4, R must be an integer multiple of 4 for u and v to be integers.

However, by using the same resolution to divide the range of $\theta$ regardless of the value of $\phi$, the rays generated by the above scheme for values of $\phi$ near zero are very close together. In contrast, when $\phi$ is near $\pi/2$, the generated rays are relatively spaced apart. It would be advantageous to be able to generate a set of rays within the hemisphere defined by the variables $\phi[0, \pi/2]$ and $\theta[0, 2\pi]$, the directions of the rays being equispaced.

A second method of discretising $\theta$ and $\phi$ in accordance with a specific embodiment of the invention produces improved spacing of ray directions. In that second method, the discrete values which $\theta$ and $\phi$ can assume are defined as follows:

$\phi = 0$, $\theta$ = don't care

and

$\phi = (\pi/2R)u$ ; u = 1, 2, ... R
$\theta = (2\pi/3u)v$ ; v = 0, 1, ..., 3u - 1

where

$R = 2^{m-1}$

This sampling scheme is governed by a parameter m. The resolution of $\phi$ and $\theta$ increases with the value of m. $\phi$ is discretised equally over the range $[0, \pi/2]$. $\theta$ is sub-divided over the range $[0, 2\pi]$ to a degree which is a variable depending on the value of u, and consequently on the value of $\phi$. If $\phi$ is small, the number of sub-divisions of $\theta$ is also small. If $\phi$ is large, the number of sub-divisions of $\theta$ is also large.

For example, if m = 5, then R = 31. Accordingly, there will be 32 sub-divisions of $\phi$ over its range. In the lower end of the range of $\phi$, for instance if u = 2, v will vary between 0 and 5. Therefore, there will be six sub-divisions of $\theta$.

Conversely, at the upper end of the range of u, such as when u = 30, v will take values in the range 0 to 89. Accordingly, if u = 30, there will be 90 sub-divisions of the range of $\theta$.

This sampling scheme produces sub-divisions of $\theta$ and $\phi$ which provides an approximation to a uniform distribution of rays.

Defining rays over the ranges set out above, a complete light field is represented by the co-ordinate system (i, j, u, v). This can be stored in the computer memory 6 as a 4D array, indexed by the co-ordinates i, j, u and v. For efficiency of memory, this 4D array can be further represented in flattened form as a 1D array, being a list based upon ranging through the co-ordinate i, j, u and v.

A scene is capable of being defined within the light field constructed of the arrays of rays. It is convenient to confine the scene for example to a unit cube space defined by the ranges:

$$- 0.5 \le x \le 0.5$$

$$- 0.5 \le y \le 0.5$$

$$- 0.5 \le z \le 0.5$$

This ensures that any orientation of the cubic volume of the parallel sub-field 70 will fully enclose the scene. That means that no part of the scene is omitted from coverage by rays in any particular direction. In fact, since the cubic volume of the sub-field 70 has smallest dimension of 2, which is its edge dimension, any scene with longest dimension no greater than 2 can be accommodated within the cubic volume 70. However, at the extreme edge of the light field, the number of rays and ray directions may be limited relative the density thereof in the central region of the light field, so it is preferred to apply a constraint on the size of the scene smaller than the theoretical·maximum size of the light field.

Assuming that the real ray 48 in Figure 2A matches with a ray in the light field, it is identified by a start point (x1, y1, z1) and a direction (dx, dy, dz). dx, dy, dz represent small changes in the co-ordinates of a point for a small distance moved in the direction of the ray. This represents the direction of the ray.

$(\theta, \phi)$ or (u, v) are then found using trigonometry on direction (dx, dy, dz). By applying a rotation matrix corresponding with the identified values of $\theta$ and $\phi$, the ray is rotated so that it becomes vertical (parallel with the z axis). Then, the (i, j) co-ordinates are found from the point of intersection of this transformed ray with the x, y plane and the previously stated definition of i, j in terms of x, y.

In the event that the real ray 48 does not match with a ray 72 of the light field, it is necessary to find a ray within the light field which best approximates the real ray. It will be appreciated that for any accepted measurement of error and for any accepted error bound, values for m and n, the discretisation variables, can be selected.

Firstly, once the real ray directions has been converted into direction co-ordinates $(\theta, \phi)$ or (u, v), the direction co-ordinates are "rounded" to the nearest provided value. In the case of (u, v), this will be the nearest integer. Secondly, once the actual intersection of the real ray, rotated back to the vertical, with the x, y plane has been found, the co-ordinates of the intersection can be "rounded" to the nearest provided value of (x, y) or (i, j). In the case of (i, j), this will be the nearest integer. It is preferable to fit the direction first, since errors introduced by approximating direction will have a greater impact on the eventual propagation of light in the scene.

In reverse, a given set of co-ordinates (i, j, u, v) defines a ray 72 which may be within the scene. u and v are used to calculate $(\theta, \phi)$ for that ray 72. Therefore, $(x_i, y_j, -1) R_y(\phi)R_z(\theta)$ and $(x_j, y_i, +1)R_y(\phi)R_z(\theta)$ give the end points of the ray in real co-ordinates, where $R_y$ and $R_z$ are standard three dimensional rotation matrices about the y and z axes respectively. This is useful for identifying the position of a point lying on the ray within the scene.

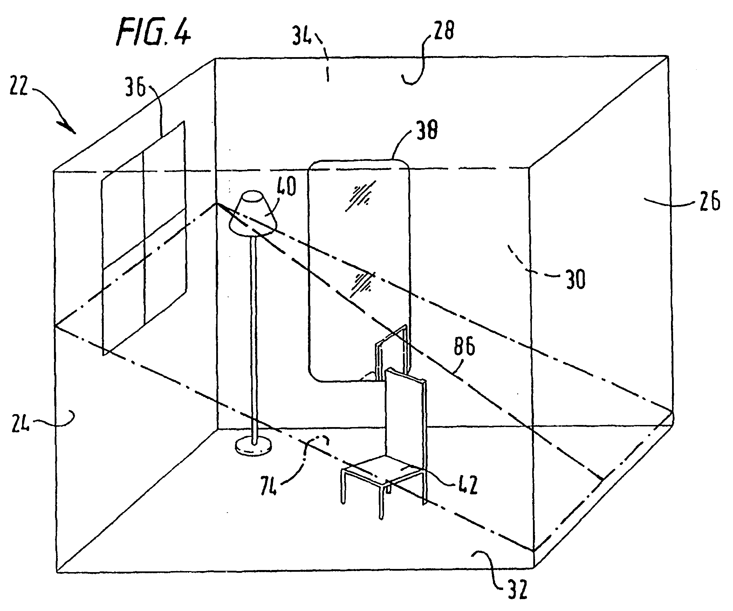

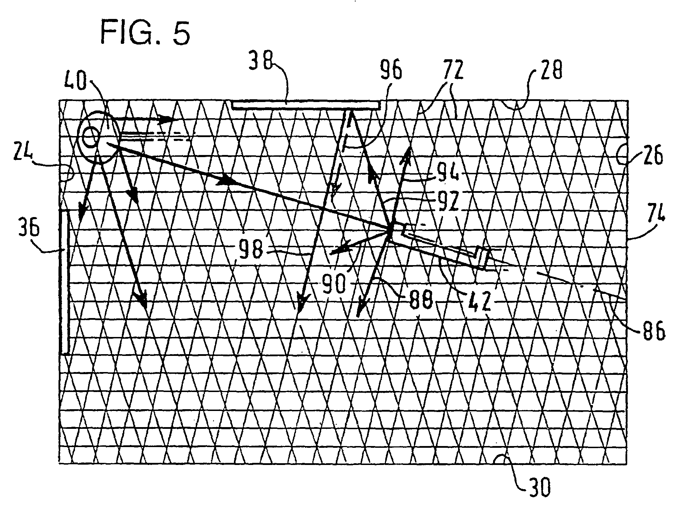

The scene 22 of Figures 2A and 2B is illustrated again in Figure 4. A particular plane 74 within the scene is identified by dash lines; the position of the plane 74 is defined by a horizontal line along the left-hand side wall 24 substantially one third of the height of the wall from the top of the wall, and a horizontal line along the right-hand side wall 26 substantially at the foot of the right-hand side wall. The plane 74 intersects the lamp 40 and the back of the chair 42. The selected plane 74 contains a large number of rays, depending on the resolution of the discretisation of $\phi$ and $\theta$. However, Figure 5 shows a selection of these rays 72 in three different directions. All other rays have been omitted for reasons of clarity. The portion of the scene intersected by the plane 74 is shown, with the window 36, the mirror 38, the lamp 40 and the back of the chair 42 illustrated.

One particular ray 86 is shown, which passes along the plane through the lamp 40 and the back of the chair 42.

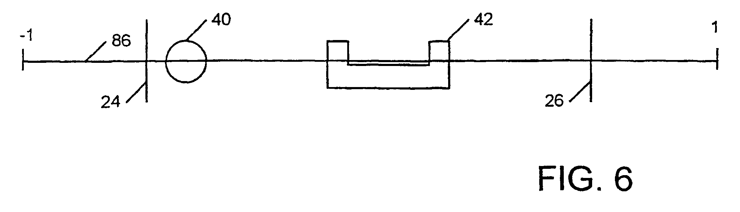

This is illustrated in more detail in Figure 6. The ray, when transformed back to the vertical, extends from z = -1 to z = +1, with the various objects intersected, namely the left-hand side wall 24, the lamp 40, the back of the chair 42 and the right-hand side wall 26 placed thereon at the appropriate places. All points along the ray can be assigned a position by referring back to the z axis.

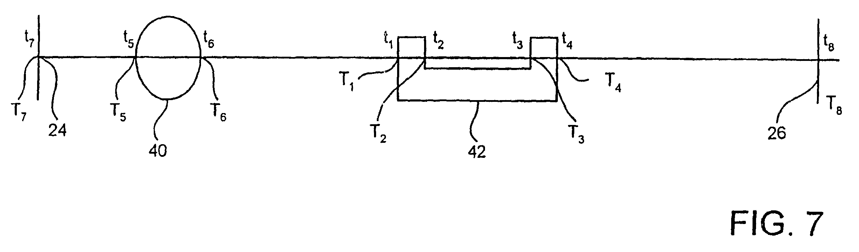

Figure 7 illustrates the segment of the ray 86 between the side walls 24, 26 which is the part of the ray which is of most interest, being as it is part of the scene 22.

In order to render an object of the scene into the light field, firstly a ray passing through an object must be computed. Then, when such a ray 86 is computed, all of the intersections of that ray with the object must be identified by position. That position is expressed as a value t in the parametric equation:

$$p(t) = p + t(q-p) \; 0 \leq t \leq 1$$

where p and q correspond with intersections of the ray 86 with the limits of the scene, i.e. side walls 24, 26. Therefore, as intersections are found, the ray 86 has an associated set of intersections $[0, t_1, t_2, \dots t_k, 1]$ where the $t_i$ are parametric values corresponding to the positions of the intersections with objects. The real co-ordinate position of each intersection can be found from $p(t_i)$.

In order to keep account of intersections of the ray, the intersections are arranged in an interval list. Interval lists for all rays of the entire light field are arranged in a four-dimensional array indexed by parameters (i, j, u, v). Each interval list is initially set to null, before intersections are found and arranged therein. An initial interval list represents the interval [0, 1], i.e. the full length of the ray within the bounds of the scene.

Each entry in the interval list includes not only the t value, but other data concerning the nature of the intersection as well. All of the data is collected in a structure called, hereinafter, a T-Intersection, having fields for the t-value, the object intersected, the direction of potential radiance from the intersection, a radiance r, and an unshot radiance u.

Unshot radiance is a quantity which is stored at a T-Intersection for an object, and which is used during processing of light propagation in the light field. It represents a quantity of light which has been received by an object intersection, and is to be processed in due course by a further processing step, to be propagated in accordance with the appropriate physical behaviour at that intersection. In a fully processed light field, ready for viewing, unshot radiance is zero at all intersections.

Radiance r and unshot radiance u are typically vectors, expressing energy levels for red, green and blue light (RGB) so that coloured light can be represented. These vectors are initially set to zero vectors. It will be appreciated that other means of expressing coloured light, other than RGB, are also possible.

The direction is set to be either "right" or "left". The "right" direction corresponds with the direction along the ray from z<0 to z>0 when the ray is transformed back to the vertical; "left" is in the opposite direction.

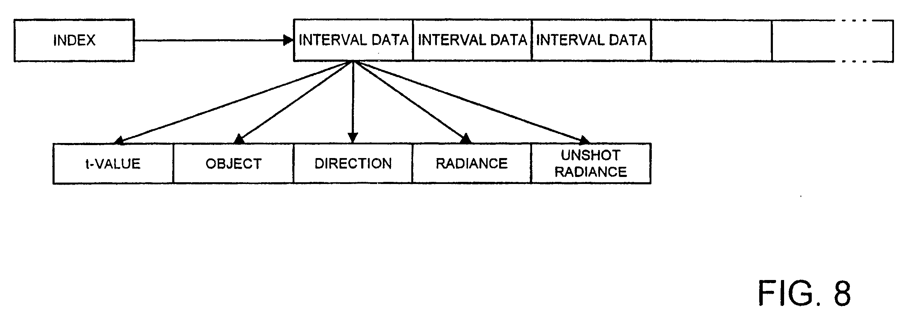

Radiance r and unshot radiance u are vector quantities if the system is arranged to consider colour, polarisation or other characteristics of light within the system which need to be described. The structure of the T-Intersections is illustrated in Figure 8. Advantageously the T-Intersection includes a field for the "normal vector" at the point of intersection with the object, though this is not essential since the normal can always be computed by reference to the point of intersection and the data defining the object.

The T-Intersections should be placed in a data structure which allows for ease of implementation and relatively constant look-up time.

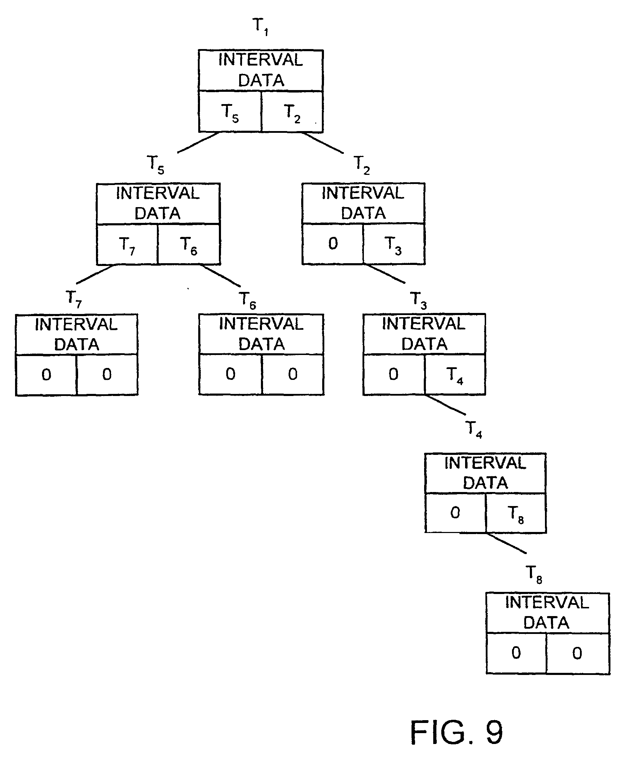

In this embodiment, a standard recursive binary tree is used, known hereinafter as an interval tree. The interval tree corresponding to the ray 86 illustrated in Figure 7 is illustrated in Figure 9.

In the general case, each node of the interval tree corresponds to a T-Intersection and further comprises two child nodes, called left_Tree and right_Tree. left_Tree and right_Tree are also interval trees. This structure allows left_Tree and right_Tree to have child nodes, and so on. When an object is rendered into the light field, and a first intersection is found with the ray under consideration, the intersection is loaded into the previously empty interval tree for that ray. The interval tree now comprises one node, and the two child nodes are null. As a second T-intersection is loaded into the interval tree, the t-value contained in that second T-Intersection is compared with the t-value contained in the T-Intersection of the first node. If the t-value of the second T-Intersection is lower than the t-value of the first T-Intersection, then the second T-Intersection is placed in the left-Tree child node of the first node. Otherwise, the second T-Intersection is placed in the right Node child node of the first node. In that way, an interval tree is constructed which is sorted in respect of the t-values, which binary tree can be used with ease to search for T-Intersections by t-value.

A third intersection can be added in the same way - if a child node is full then comparison is made with the t-value of the contents of that child node. Progress is made down the branches of the tree until a null child node at an appropriate position is found.

In the example illustrated in Figure 7, the ray 86 is parameterised such that t = 0 at the left-hand wall 24 and t = 1 at the right-hand wall 26. The T-Intersections along the ray 86 are identified by subscript, with $T_1$ to $T_4$ representing intersections with the chair 42 and $T_5$ and $T_6$ representing intersections with the lamp 40. $T_7$ and $T_8$ represent the intersections with the side walls 24, 26. Accordingly, the T-Intersections have the following attributes:

$T_1$ = (0.50, 42, left, 0, 0)
$T_2$ = (0.52, 42, right, 0, 0)
$T_3$ = (0.70, 42, left, 0, 0)
$T_4$ = (0.72, 42, right, 0, 0)
$T_5$ = (0.07, 40, left, 0, 0)

$T_6$ = (0.15, 40, right, 0, 0)
$T_7$ = (0.00, 24, right, 0, 0)
$T_8$ = (1.00, 26, left, 0, 0)

If those T-Intersections are found in that order, and loaded onto a binary tree, the binary tree will take the form illustrated in Figure 9.

Once T-Intersections are loaded into the binary tree, look-up time is dependent on the logarithm of the number of T-Intersections. This is an advantageous arrangement because look-up time in the interval tree will not increase significantly as an increasing number of intersections are loaded thereon. Moreover, as will become apparent from later description, at times it is necessary to find a T-Intersection adjacent a given T-Intersection in a given direction. It is relatively straightforward to find that T-Intersection using the binary tree in its conventional way.

Once all rays have been found which intersect objects, and all intersections have been loaded onto relevant binary trees, the rendering of the scene into the light field is considered complete.

Thereafter, radiance must be added to the light field, by taking into consideration any objects within the field which emit light. In the present example, the window 36 and the lamp 40 are considered to be light emitters.

Taking into consideration the lamp 40, all of those rays which intersect the lamp are computed. When a ray 86 is computed, a T-Intersection $T_5$ is identified on the ray as intersecting with the lamp 40. Radiance in accordance with the light emission characteristic of the lamp 40 is added to the data structure, and unshot radiance equal to the change in radiance is also added thereto. T-Intersection $T_6$ is then found and treated in the same way, and thereafter, all rays intersecting the standard lamp 40 are treated in the same way.

Moreover, although not illustrated in Figure 5, rays intersecting the window 36 are treated in the same way with respect to light emitted thereby, or more properly transmitted therethrough. In the interests of simplicity, it is more straightforward to consider the window as an object with light emitting properties than to render the sun into the scene. However, light emitting objects could be placed on the other side of the window, to increase realism, if this is necessary. The embodiment can accommodate transparent objects such as the glass of the window.

Obviously, if it is desired to represent further objects on the other side of the window, those objects must be rendered into the light field as well. This may require some scaling of the scene in order to ensure that the whole scene is enclosed.

Once all light emission has been added to the light field, each object is considered to establish whether it is intersected by a ray which carries unshot radiance. In the example shown in Figures 5 and 7, the back of the chair 42 is in receipt of unshot radiance along segment ($T_6$, $T_1$). At that point, the unshot radiance is considered to be emitted light from that point on the chair, and it is transmitted through diffuse reflection along all rays emanating from on or near T-Intersection $T_1$ on ray 86.

In the same way as a real ray is unlikely to match exactly a ray in the light field, it is unlikely that exact coincidence with other rays will occur at intersection $T_1$, and so approximations will be necessary. In fact, when a direction for further propagation is identified, the closest ray is selected, and the diffusely reflected radiance and unshot radiance is added to each such ray. Those diffuse reflections are identified by arrows 88, 90, 92, 94 in Figure 5. Moreover, some radiance will be reflected back onto ray 86 towards the lamp 40. Rays 88, 90 are shown despite the fact that they do not coincide with illustrated sets of rays; they will each coincide with another ray not illustrated but within the set of rays in the light field which are contained in the illustrated plane 74. Other diffusely reflected rays will also be identified in other directions not contained in the plane 74.

Once all unshot radiance incident on the chair 42 is dealt with in this way, the next object to be in receipt of unshot radiance is considered. For example, the mirror 38 is now in receipt of unshot radiance as a result of reflected light from the chair along the ray 92. However, in that case the mirror is a specular reflector, and so only one true reflected ray exists. That true reflected ray is illustrated as a broken line denoted by reference numeral 96 in Figure 5. In the example embodiment, no ray within the light field exactly coincides with true ray 96. Therefore, the parallel sub-field 70 in a direction nearest to the direction of the true ray 96 is identified and the ray 98 in that parallel sub-field 70 closest to the true ray 96 is identified. Then the unshot radiance along the ray 92 is reflected along the best fit reflected ray 98. Therefore, by iterating through all objects in receipt of unshot radiance, radiance can be added at T-Intersections in accordance with the distribution of light in the scene. In fact, the objects marked as being in receipt of unshot radiance are considered in turn, in decreasing order of the amount of unshot radiance received by each object. In that way, objects having most effect on illumination of the scene are dealt with first. The above technique is carried out without regard to any selected viewing position at this point.

The above examples as illustrated in Figures 5 to 9 have been described with regard to solid objects which reflect light either specularly or diffusely, or a combination of both. However, objects which are at least partially transparent can be treated in the same way. An object with transmissive properties will be described in terms of the effect which the object has on light incident thereon. Radiance travelling along a ray intersecting a specularly transmitting surface of an object can be computed by identifying the point of exit of the light from the object and the true direction thereof, taking account of, for example, the refractive properties of the object. The closest virtual light field ray to this true direction can then be found and radiance can then be propagated along that closest ray.

The incidence of light on a diffusely transmissive object can be computed in the same way, but taking account of the fact that radiance will need to be propagated along a plurality of rays.

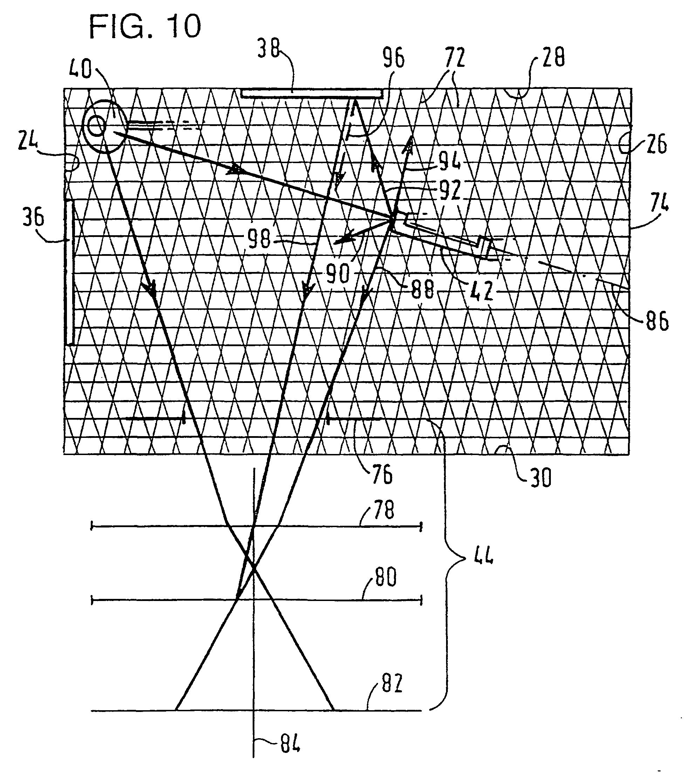

A virtual eye 44 is illustrated in Figure 10. The virtual eye 44 comprises a pupil 76, a lens 78, a focal plane 80, an image plane 82 and an optical axis 84. In order to view the scene from this point, all rays identified as entering the pupil 76 are considered to have entered the virtual eye 44. The direction of each ray and its position relative the optical axis 84 are identified, and a lens equation defining the structure and position of the lens 78 is applied thereto. A lens equation is a vector equation which identifies the trajectory of a refracted ray from a given trajectory of an incident ray.

Thereafter, the radiance associated with that ray at that point along the ray is recorded in an array associated with pixels or sub-pixels in order to build up an image. Smoothing functions can be applied to the image so that any parts thereof which are not fully constructed having regard to the number of rays entering the pupil 76 can be filled. It will be appreciated that the step of building up an image is carried out independently of the calculation of the characteristics of the light field with object and light emitters rendered therein, and so that use of the light field is entirely view-independent.

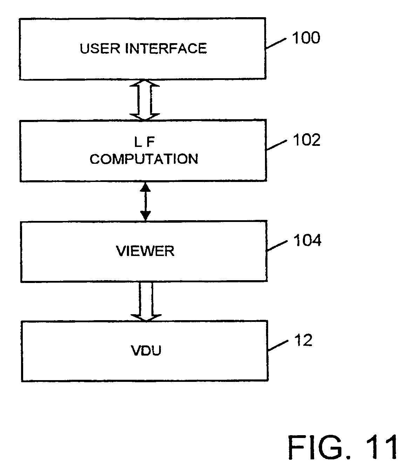

The apparatus of the particular embodiment of the present invention will now be described in more detail with reference to Figures 11, 12 and 13.

Figure 11 is a basic block diagram illustrating operational modules of the computer 2 illustrated in Figure 1.

A user interface 100 comprises a facility for the interaction of a user with the apparatus. By virtue of the user interface 100, a user can identify the objects which are to be placed in a scene, and their characteristics such as light emission, absorption, colour and/or position etc. Coupled with the user interface 100 is a light field (LF) computation unit 102.

The LF computation unit 102 is operable to define a light field in terms of the four-dimensional co-ordinate system defined above, to render objects into a scene within the light field and to activate light emission such that radiance is distributed through the light field.

A viewer unit 104 is coupled with the LF computation unit 102 so as to obtain data therefrom concerning radiance values along rays 72 of the light field. The viewer unit 104 is operative to convert those radiance values into a focused image, and to process that focused image into a form which can be viewed. The viewer unit 104 is linked with the VDU 12 as described with reference to Figure 1.

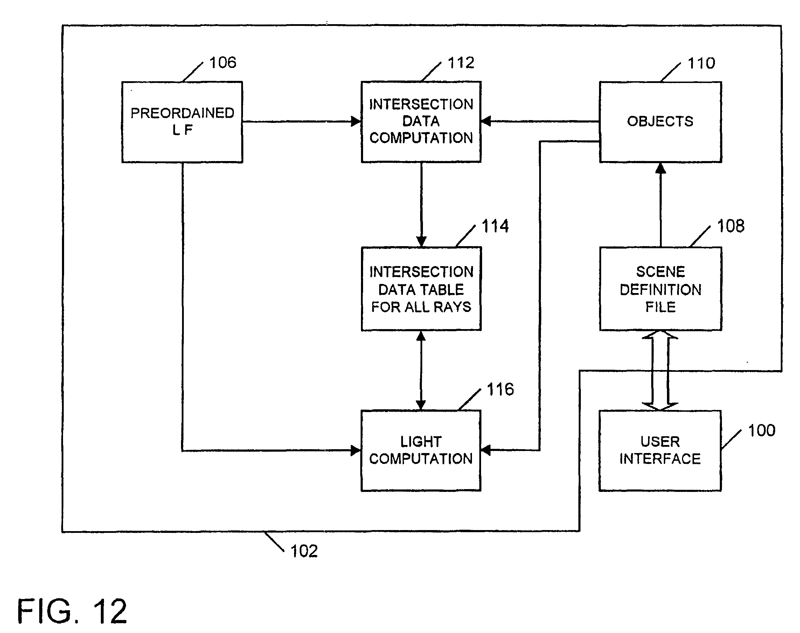

Figure 12 comprises a block diagram showing the components of the LF computation unit 102. The LF computation unit 102 comprises a preordained light field 106 which cannot be modified by the action of the user.

In an alternative embodiment, the resolution of the light field 106 could be modified by the user. This could be carried out to select high speed, or high quality imaging depending on user requirements.

Via the user interface 100, described with reference to Figure 11, a user defines, or calls up, a predetermined scene definition file 108. That scene definition file 108 contains information concerning the nature of objects to be placed in the light, field 106. Those object definitions are placed in an objects file 110. Object definition information includes surface reflection characteristics, light emission properties, any light transmission properties, and any surface pattern. It also includes a description of the geometry and position of the object in the scene.

The LF computation unit 102 further comprises an intersection data computation unit 112 which considers each object in turn from the objects file 110 in respect of the preordained light field 106, to establish the position of intersections along each intersected ray of the light field. The intersection data computation unit 112 is operable to produce an intersection data table 114 for all rays within the preordained light field 106.

The LF computation unit 102 also comprises a light computation unit 116 which makes reference to the objects file 110 to identify light emitting objects, and refers to the preordained light field 106 and the intersection data table 114 to render light through the light field. Light is rendered through the light field, as described previously, by up-dating data within the intersection data table 114.

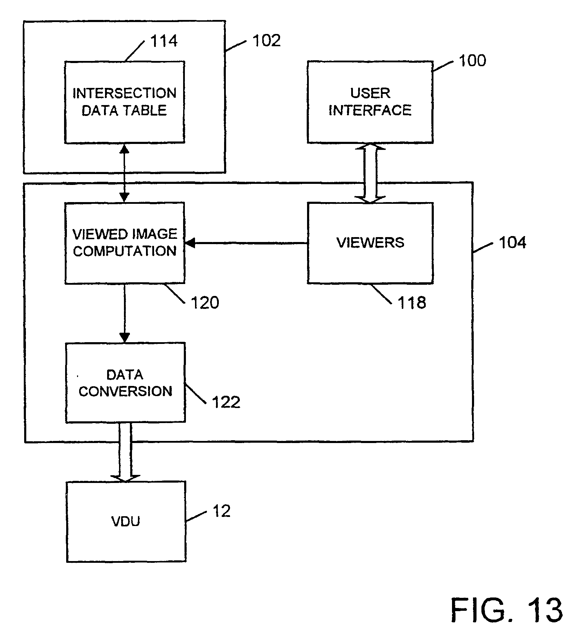

Figure 13 illustrates in more detail the components of the viewer unit 104. The viewer unit 104 comprises definitions of predetermined viewers 118 (such as a human eye, a regular camera lens, fish eye lens, wide-angle view, zoom etc) which can be selected and/or modified by interface with the user through the user interface 100. The user interface 100 also provides a facility for specifying the position and orientation of the viewer lens to be used within the light field. This facility is a command line interface at which the co-ordinates and viewing direction of the viewer are specified by a user. Alternative arrangements could be provided, such as by means of a pointing device (e.g. mouse, tracker ball) or other orientation device (e.g. wand).

The viewer unit 104 further comprises a viewed image computation unit 120 which makes reference to the selected viewer lens and the intersection data table 114 of the LF computation 102. The viewed image computation unit 120 is operable to produce an image in accordance with a lens equation describing the characteristic of the selected lens. It will be appreciated that a selected viewer 118 could include a sequence of lenses which, in combination, provide a desired optical effect.

Further, the viewer could comprise a light meter capable of delivering data representative of light received at a point, or over a surface. This could be particularly useful in architectural and theatrical design, where light distribution is an important consideration.

Data corresponding to that image is passed to a data conversion component 122, such as for converting the data into raster scan data for use with a VDU. Up to that point, the level of resolution of the image can be defined to suit the resolution of the light field, and need only be converted into a fully pixellated image at the final stage. The converted image is then output to the VDU 12.

A plurality of viewers 118 can be defined, either to deliver different images to different VDU's or, in the case of two viewers being provided, to deliver stereoscopic images to screens in a headset for use in Virtual Reality applications.

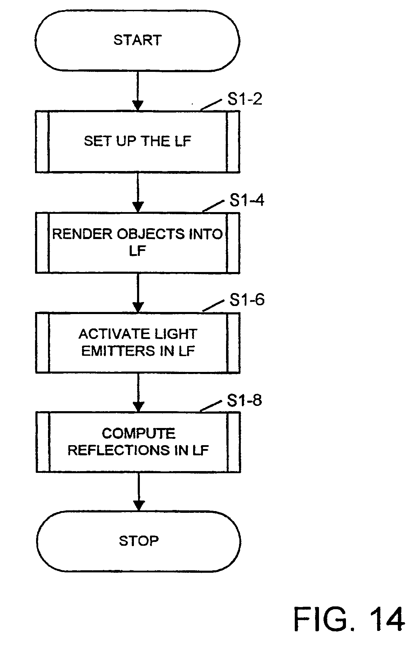

Figures 14 to 20 describe procedures performed by the LF computation 102 during operation thereof. Figure 14 describes the main procedure of the LF computation 102.

On commencement of the procedure, the LF is set up in step S1-2 by the SET UP THE LF procedure described later. Once the LF is set up, objects are rendered into the LF in step S1-4 by the RENDER OBJECTS INTO LF procedure to be described later.

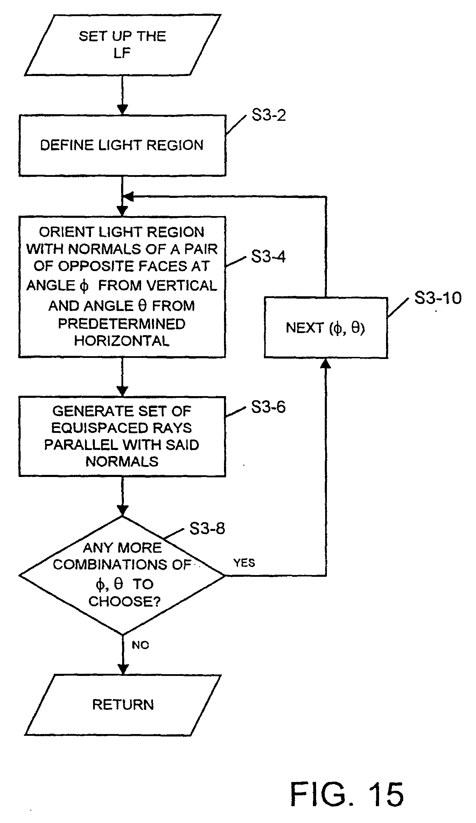

Once all objects have been rendered into the LF, those objects which are light emitters are activated in step S1-6, by means of the ACTIVATE LIGHT EMITTERS IN LF procedure to be described later. Then, in step S1-8, once the light emitters have been activated, radiance is emanated through the LF by means of the COMPUTE REFLECTIONS IN LF procedure described below. Once that procedure has been completed, the LF is fully set up with objects rendered therein and light emission activated. The SET UP LF procedure will now be described with reference to Figure 15. Firstly, in step S3-2, a parallel sub-field 70 is defined as a grid of n by n parallel rays. The rays are arranged in x, y, z space parallel with the z axis and the sub-field is bounded by the following constraints:

$$- 1 \leq x \leq 1$$

$$- 1 \leq y \leq 1$$

$$- 1 \leq z \leq 1$$

Following that step, in step S3-4 the sub-field is cycled through a predetermined number of orientations of $\phi$ and $\theta$, wherein $\phi$ is the angle of a ray from the z axis and $\theta$ is the angle defined between a ray resolved into the x, y plane and the x axis. In order to cover all possible directions of the rays, $\phi$ and $\theta$ must pass through the following range:

$\phi = 0$
$0 \langle \phi \langle \pi/2 \; ; \; 0 \leq \theta \langle 2\pi$
$\phi = \pi/2 \; ; \; 0 \leq \theta \langle \pi$

$\phi$, $\theta$ are discretised in accordance with the second method identified above, so as to generate a near uniform distribution of ray directions. In step S3-6, a set of rays parallel with the pre-rotated z-axis is generated. The rays are look-ups into a four-dimensional array of interval trees as described above with reference to Figure 9. Step S3-8 enquires as to whether any further combinations of $\phi$, $\theta$ need to be considered. If so, step S3-10 selects the next combination, and the cycle recommences. If not, the routine returns.

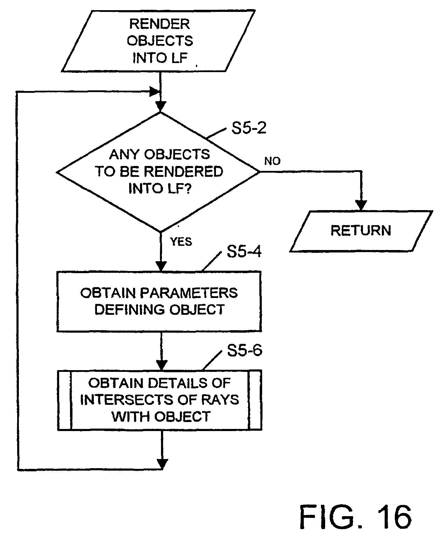

The RENDER OBJECTS INTO LF procedure will now be described with reference to Figure 16. The procedure commences by enquiring in step S5-2 whether any objects are to be rendered into the LF. This is carried out by calling the OBJECTS file 110. If there are no objects to be rendered into the LF, the procedure returns to the main procedure. Otherwise, in step S5-4, the OBJECTS file 110 is called to obtain the parameters defining the object. Those parameters consist of the shape definition, which is in terms of its geometry, and the surface characteristics of the object. Those surface characteristics consist of the light absorption characteristics, and the bi-directional reflectance distribution function (BRDF) for the surface. The object parameters also include details of any light emission characteristics of the object. At this point, however, only the geometry of the object is taken into account.

Following the obtaining of the parameters defining the object, the procedure calls, in step S5-6, a sub-procedure namely OBTAIN DETAILS OF INTERSECTS OF RAYS WITH OBJECTS 210. When that sub-procedure has completed, the procedure returns to step S5-2 to repeat the enquiry as to whether any objects remain to be rendered into the LF. If no more objects require rendering into the LF, then the procedure returns, otherwise the procedure selects the next object and repeats as necessary.

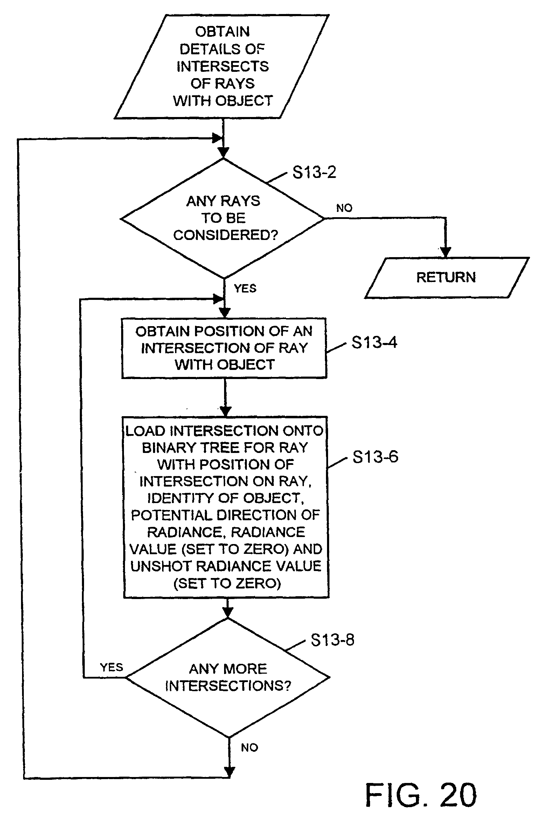

The OBTAIN DETAILS OF INTERSECTS OF RAYS WITH OBJECT procedure will now be described with reference to Figure 20. Firstly, in step S13-2, the procedure enquires as to whether any rays intersecting the object remain to be considered. If no more rays remain to be considered, the procedure returns to the RENDER OBJECTS INTO LF procedure described above. Otherwise, in step S13-4, an intersected ray is considered and, in step S13-6, intersections of that ray with the object are successively loaded onto a binary tree for that ray. The intersection data consists of the position of the intersection on the ray, the identity of the object intersected, and the potential direction of radiance from the intersection. These data are determined from the parametric equation identified for the rays by means of its co-ordinates $(x, y, \phi, \theta)$. Further, the intersection data includes radiance and unshot radiance values which are initially set to zero. The procedure then enquires in step S13-8 as to whether any other rays remain to be considered. If no more rays remain to be considered, then the procedure returns to the earlier described RENDER OBJECTS INTO LF procedure. Otherwise, the procedure loops back to step S13-4.

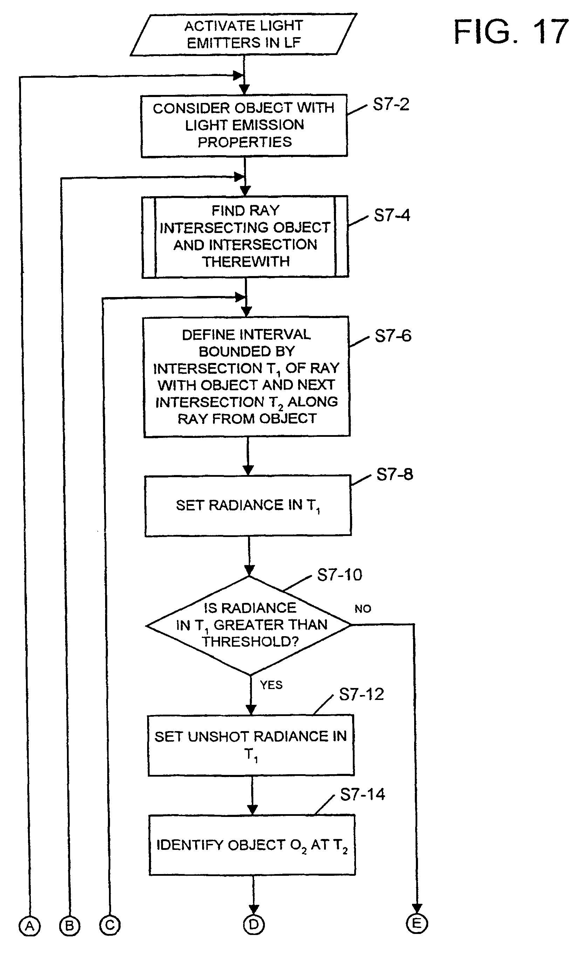

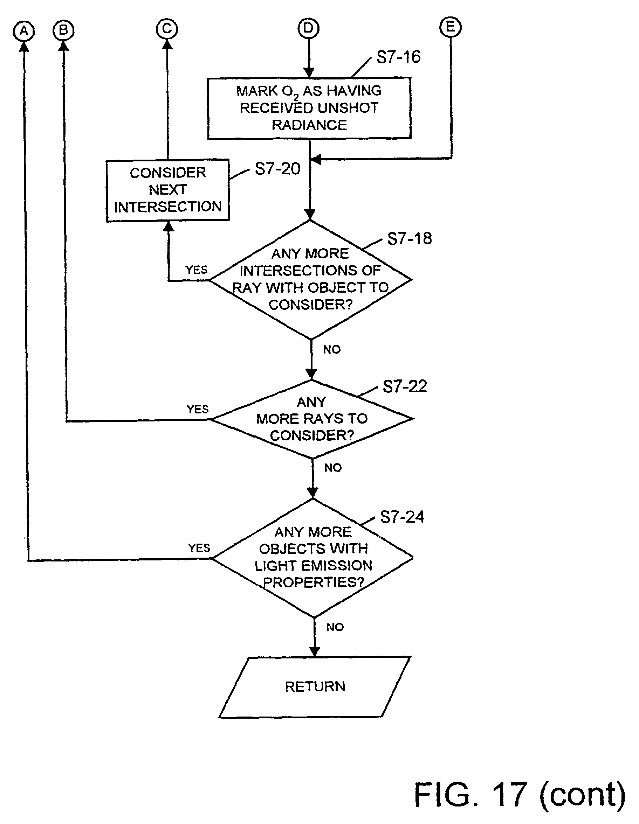

Once all objects have been rendered into the LF, the ACTIVATE LIGHT IMAGES IN LF procedure is called. This procedure is described in more detail with reference to Figure 17. The procedure commences in step S7-2 by considering an object with light emission properties. Thereafter, a sub-procedure FIND A RAY INTERSECTING OBJECT AND INTERSECTION THEREWITH 212 is called in step S7-4. This procedure will be described later.

Once a ray intersecting the object and its intersection therewith has been identified, in step S7-6, an interval is defined which is bounded by that intersection and the next intersection along the ray from that object in the direction of predicted radiance (i.e. "right" or "left") defined in the data associated with the intersection. Then, in step S7-8, the radiance in that interval is set in the data structure associated with the intersection under consideration. That radiance is set in proportion with the light emitting properties of the object, which are called from the parameters defining the OBJECT as held in the objects file 110.

In step S7-10, an enquiry is made as to whether radiance in that interval is greater than a predetermined threshold. This threshold is set having regard to the scaling used for representing radiance, and the threshold for visibility of light in the application for which the light field representation is intended. This threshold for visibility is determined for a graphically represented image as the sensitivity of the human eye, and for a photometer application to the minimum sensitivity of the photometer.

If the radiance is greater than the predetermined threshold, then the procedure concludes that it would be worthwhile computing any reflections from that radiance. As such, step S7-12 then causes the unshot radiance in the intersection data in question to be set so as to correspond with the change in the radiance. The object at the other end of that interval is identified in step S7-14 and that object is marked in step S7-16 as being in receipt of unshot radiance.

If the radiance in the interval is less than the threshold, then the unshot radiance is not set, and there is no requirement to identify and mark the object at the other end of the interval. Thereafter, any other intersections of that ray with the object in question are considered in steps S7-18 and S7-20 and radiance and unshot radiance are updated as required. Any other rays intersecting the object are then considered in step S7-22, and then in step S7-24 any other objects with light emission properties are considered in the same way. Once all objects having light emission properties have been processed in the same way, the procedure returns.

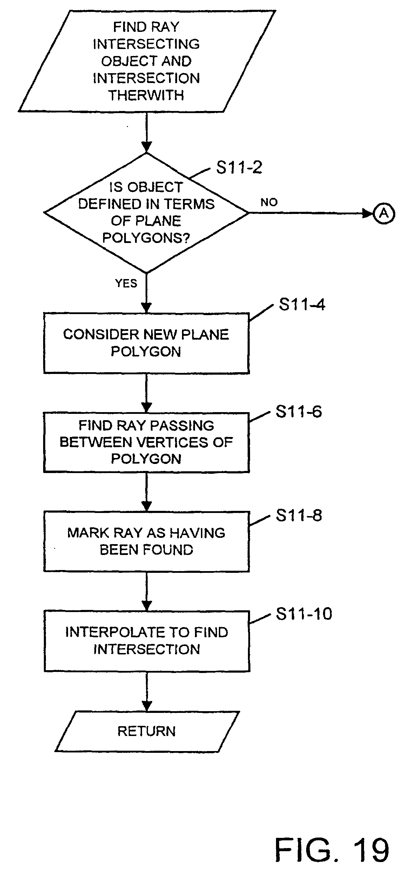

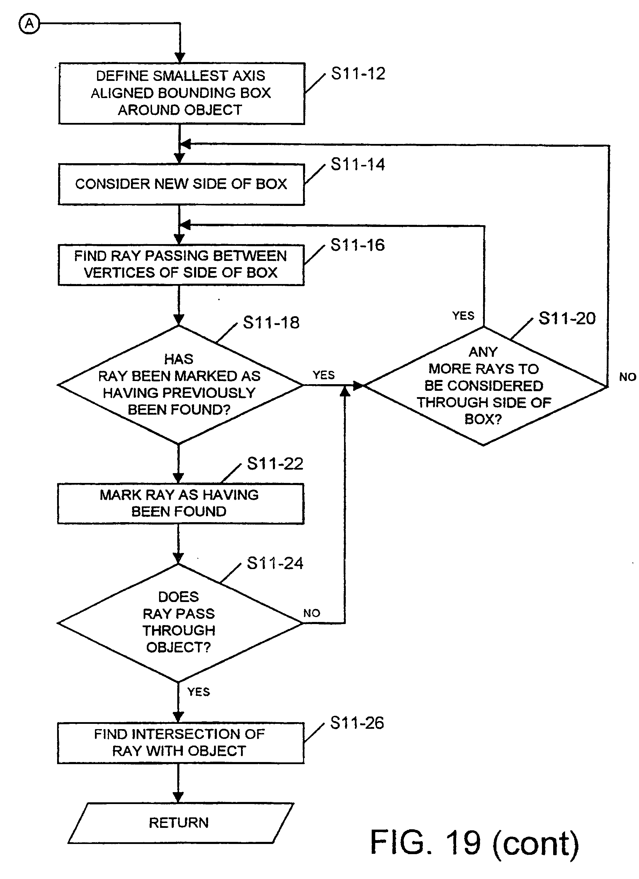

The ACTIVATE LIGHT EMITTERS IN LF procedure called the FIND RAY INTERSECTING OBJECT AND INTERSECTION THEREWITH procedure. That procedure will now be described with respect to Figure 19. The procedure firstly enquires in step S11-2 as to whether the object is defined in terms of plane polygons. That information is contained in the OBJECTS file 118. If it is so described, a more simplified procedure is followed. A plane polygon is considered in step S11-4, and a ray passing between the vertices of the polygon is found in step S11-6. The ray is marked in step S11-8 as having been found, and the intersection of that ray is found in step S11-10 by Z-interpolation within the polygon under consideration. Once that intersection is found, the procedure returns.

The procedure of finding and dealing with rays passing through a plane polygon can be dealt with using a 2-D fill algorithm as set out in "Computer Graphics, Principles and Practice" by Foley, Van Dam, Feiner and Hughes, pp 92-99.

By obtaining intersection positions using a z-interpolation technique, z-buffer data is automatically created which can be used in the creation of an image being a composite of a scene defined in accordance with the embodiment and further objects, which may be dynamic, which are entered into the scene using a z-buffer algorithm.

In an alternative case, step S11-2 may identify that an object is described not in terms of plane polygons, but in terms of a geometric shape such as a sphere or an ellipsoid, or a composite of various primitives.

One method of rendering such an object into the scene involves the definition of a bounding box around the object in step S11-12, the bounding box being axis aligned and of smallest size possible while containing the object. An axis aligned box is convenient for computation and for finding rays intersecting therewith.

A side of the box is considered in step S11-14, and a ray passing between the vertices of that side of the box is found in step S11-16. As that ray is found, a check is made in step S11-18 as to whether the ray has already been marked as found. If so, an enquiry is made in step S11-20 as to whether any more rays need to be considered. If not, a new side of the box is considered in step S11-14. If so, a new ray is found from the same side in step S11-16. If the enquiry of step S11-18 shows that the ray is not marked as found, then in step S11-24 an enquiry is made as to whether the ray passes through the object.

This check is required because a ray could pass through the box and not intersect the object. If it does not pass through the object, then the procedure continues from step S11-20, and the same checks are carried out as before.

Once a ray has been found which passes through the object, then the intersections of the ray with the object are calculated with respect to the object shape definition. Once those intersections has been identified, then the procedure returns.

The intersections between rays and the object can be identified in an alternative manner. For every direction, defined by available combinations of $\phi$ and $\theta$, a direction aligned 2D projection of a bounding box around the object is found. Then, all rays passing through that 2D projection in the direction of $\phi$, $\theta$ are tested against the object for intersection (if any) and the point along the ray at which intersection takes place.

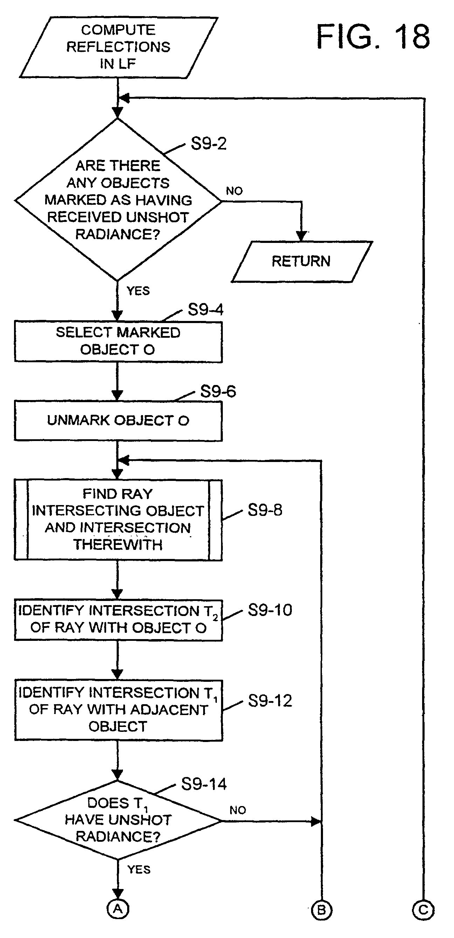

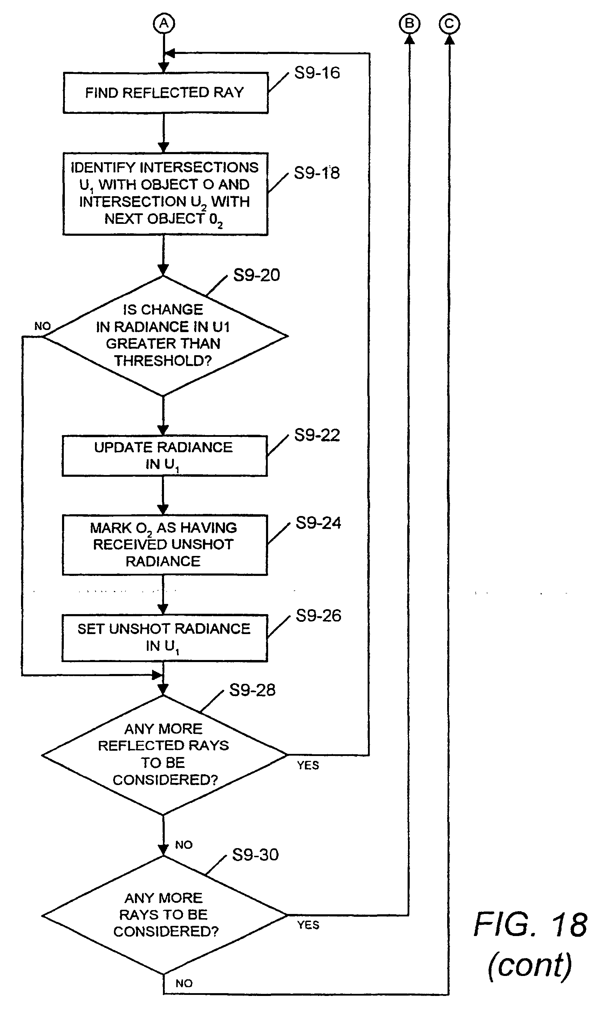

Finally, once all light emitters in the LF have been activated, and radiance has been added to all of the rays intersecting those light emitters, reflections through the LF are computed. That is carried out by calling the COMPUTE REFLECTIONS IN LF procedure described now in more detail with reference to Figure 18. Firstly, in step S9-2, the procedure inquires as to whether there are any objects marked as having received unshot radiance. Objects will have been marked as a result of ray intersections having had radiance added to them above a predetermined threshold, and therefore corresponding unshot radiance will have been added thereto as well. If no such objects are found, the procedure returns.

An object which has been so marked is put under consideration in step S9-4, and is then unmarked in step S9-6. In step S9-8, the procedure FIND RAY INTERSECTING OBJECT AND INTERSECTION THEREWITH, as previously described, is called. The intersection $T_2$ of that ray with the object O is then identified in step S9-10. The procedure then searches in step S9-12 through the data structure, which is conveniently in binary tree form, to identify the adjacent intersection $T_1$ along the ray in the direction of probable radiance, having regard to the BRDF at that intersection, as defined in the intersection data for intersection $T_2$. The adjacent intersection $T_1$ is checked in step S9-14 to establish whether it contains unshot radiance. If it does not contain unshot radiance, then the procedure returns to step S9-8 to consider another ray intersecting the object in question as before. Once a ray has been identified which has an intersection with the object and which has an adjacent intersection containing unshot radiance, a reflected ray is identified.

The step of finding a reflected ray in step S9-16 requires reference to the BRDF of the object, which is contained in the OBJECTS file 110. In this embodiment, the BRDF specifies diffuse reflectance, specular reflectance or a combination of both. In the case of diffuse reflectance, a plurality of reflected rays exist to be found, over the point of intersection of the incident ray under consideration with the object. With a specular reflection, the reflected ray is wholly to be a ray, of the light field, of best fit having regard to a true reflected ray as calculated with respect to the well-known laws of reflection.

In addition to specular and diffuse reflection, in certain embodiments the BRDF can specify more complicated reflection models such as "glossy" reflection, where a cone of reflected rays are produced to correspond with a given incident ray. This effect represents imperfect specular reflection, as described by Phong in CACM 18(6), June 1975, 311-317.

In respect of the or each reflected ray, the intersections of that ray with the object in question are identified in step S9-18. In step S9-20 the change in radiance in accordance with the BRDF is considered as to whether it is greater than the aforesaid predetermined threshold. If it is greater than the predetermined threshold, then, in step S9-22, the radiance in accordance with the BRDF is set in the intersection with the object in question. Then, the aforesaid adjacent object is marked in step S9-24 as having received unshot radiance, and the aforesaid intersection with the object under consideration is updated in step S9-26 so as to reflect the increase in unshot radiance. Otherwise, no consideration is taken of unshot radiance.

An enquiry in step S9-28 is then made as to whether any more reflected rays remain to be considered. If so, the procedure returns to step S9-10. Once step S9-10 has been carried out in respect of all reflected rays to be considered, the object is further considered in step S9-30 to establish whether any other rays intersecting that object have received unshot radiance. If so, then the procedure returns to step S9-8. If no more rays are to be considered, then the procedure returns to step S9-2 where the light field is further considered to establish whether any objects remain which are marked as having received unshot radiance. Once all objects are unmarked, the procedure returns.

Once all unshot radiance from all objects has been considered, the light field is fully defined with respect to the scene rendered therein. At that point, a complete data structure exists independent of any view position or the characteristics of any viewer. It would be possible to use the light field without reference to any viewer, for instance in the design of an art exhibition where even distribution of light throughout a region of the light field needs to be considered. The distribution of light in a gallery could be designed with the above-described arrangement, and the light incident on any particular wall could be monitored by means of a photometer as an alternative to a viewer. In that way, bright patches or dark patches could be eliminated from a particular wall.

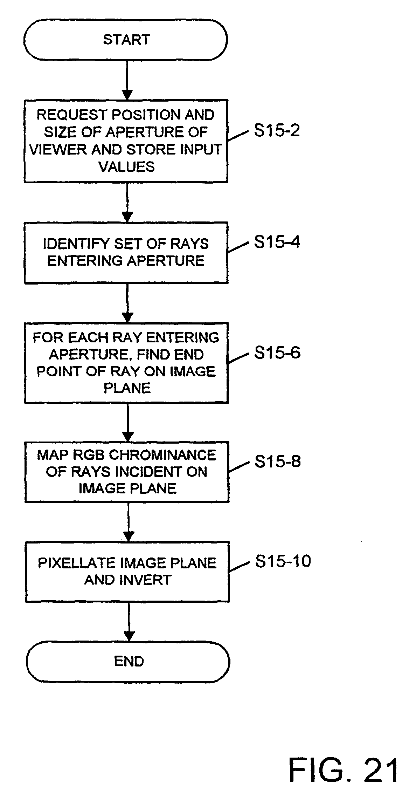

However the embodiment is also particularly suitable for applications where a particular viewpoint is required, such as is illustrated in Figure 10 with the simulated eye 44. A view can be constructed from the LF through the procedure now to be described with reference to Figure 21. This procedure stands alone from the procedure operating the LF computation, and is controlled by the user interface 100. The viewer procedure commences in step S15-2 by calling for a specification of an aperture of the viewer. This is identified from the VIEWERS file 118 under the control of the user 100. The specification of the aperture includes the actual diameter of the aperture plus its position in space and orientation. Once the aperture has been specified, a set of rays entering the aperture is identified in step S15-4. This is carried out using a procedure such as the FIND RAY INTERSECTING OBJECT AND INTERSECTION THEREWITH procedure previously described.

As each ray is found which enters the aperture, the end point of that ray on the image plane is found in step S15-6. The ray is represented as a vector which is passed, in step S15-6, through a vector equation relating to the composition of the lens. The composition of the lens is described with reference to the VIEWERS file 118. The result of the vector equation is a point on an image plane 82.

The image plane is defined as an array of elements; the radiance associated with the segment of that ray, as called back from the previous intersection of the ray with an object, is mapped, in step S15-8, onto an element within that array. It is possible that several rays will be incident on any particular element, and as each ray is incident on an element, the radiances are added together.

Eventually, as all rays are considered, an intensity map will be formed on the image plane composed of elements, which can be processed by filtering and transformation from the array of elements to form a pixellated image. In particular, if the lens structure is that of a relatively simple box camera, the image will need inversion before it can be displayed correctly on a VDU.

The viewing procedure set up above is potentially relatively fast, and is independent of the level of complexity of the image. In fact, it is generated in substantially constant time from frame to frame as the viewer moves. With sufficient and reasonable processing power, that constant time could be reduced to such an extent that the viewer could be implemented as a real-time viewer.

The above identified arrangement can also be used in a headset for virtual reality applications, with stereoscopic images being projected to the eyes. Both images can be computed rapidly. Moreover, the orientation of the viewing direction from which images are computed can be altered depending on the angle of gaze of the eyes of the wearer of the headset. This is an important development which has previously required significant computational power for its achievement.

Although the above apparatus has the potential for a view of a static scene to be changed in real-time, dynamic changes to the scene itself in real-time may be rather more difficult to achieve. However, the apparatus can be combined with other apparatus to define an image of a static, background scene in accordance with the present disclosure, while the other apparatus produces an image which can be changed dynamically, which image is superimposed over the image of the static scene. This might result in a degradation of the realism of the overall image, since there is not likely to be full interaction between the light field and the dynamic objects. As noted earlier, the apparatus can readily be used to retrieve z-values for combination with a z-buffer method for rendering objects into a scene.

Moreover, the embodiment described above assumes that the light transmitting medium is non-participatory. In practice, media are rarely non-participatory, and so attenuating properties can be represented by means of placing intersections at random along the rays in the light field. The concentration of those random intersections depends on the level to which the medium in question attenuates light transmitted through it. In that way, the scene can be illuminated taking account of the attenuating properties of the medium. In fact, attenuation is commonly the result of particles (such as water droplets or dust) in suspension in air, and so the random distribution of instructions is a reasonable approximation of reality.

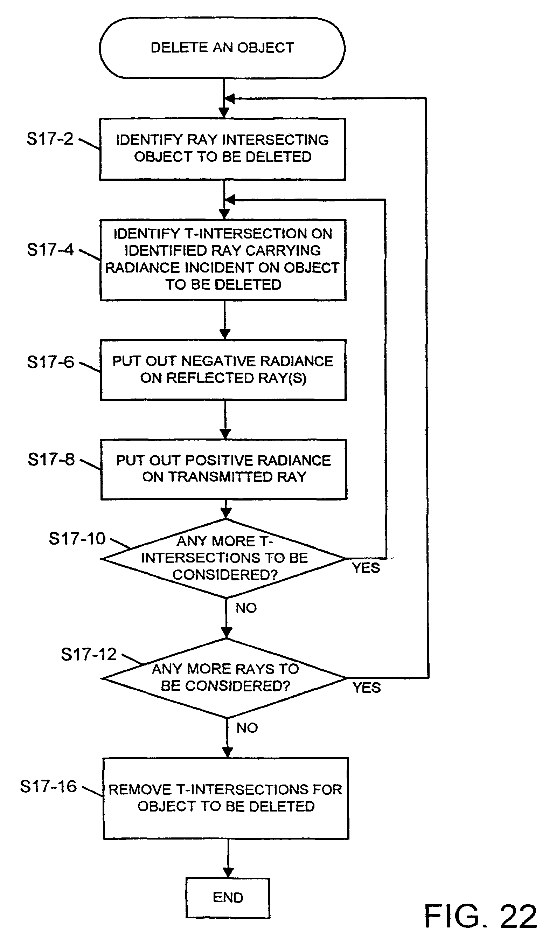

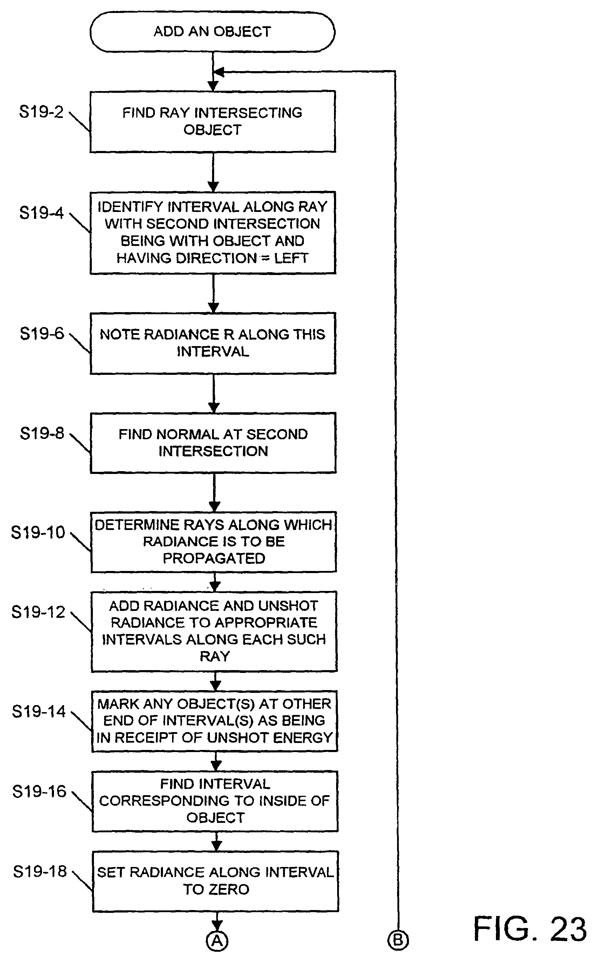

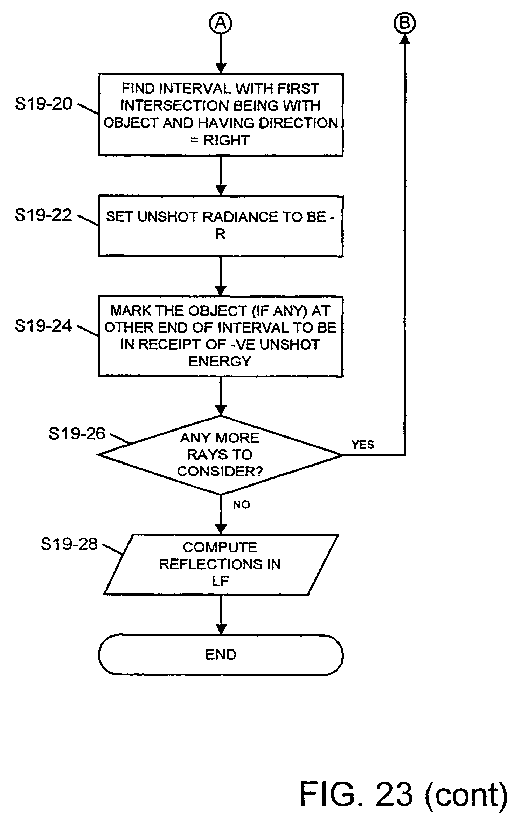

The preferred embodiment of the invention as described above has been described in relation to the modelling of a scene to which no changes are to be made following modelling. However, circumstances could arise in which it would be desirable to be able to delete an object from the scene, or to add an object to the scene. Figures 22 and 23 describe procedures by which these two actions can be achieved.

Firstly, Figure 22 illustrates a flowchart defining a procedure for deleting an object from a scene defined in the light field to which light has already been applied. In step S17-2, a ray is identified which intersects the object to be deleted. Thereafter, in step S17-4, a T-Intersection is found for the identified ray carrying radiance incident on the object in question.

Then, in step S17-6, the radiance R along the interval, of which the found T-intersection forms one bound, is noted. The surface normal at the intersection on the object to be deleted is found, and the redistribution of radiance along reflected rays is determined by adding negative radiance (and unshot radiance) to T-intersections for the or each reflected ray. Thereafter, the negative unshot radiance is dealt with as would positive unshot radiance in accordance with the procedure as previously described with reference to Figure 18.

Then, in step S17-8, the radiance at the T-intersection corresponding with the transmitted ray is set to be equal the incident radiance R.

Then, an enquiry is made in step S17-10 as to whether any more T-intersections are to be considered in respect of the object to be deleted. If there are, then the procedure repeats in respect of the next T-intersection.

Then, an enquiry is made in step S17-12 as to whether any further rays are to be considered. If so, the above procedure is repeated in respect of further rays; otherwise, in step S17-16, the intersections corresponding to the deleted object are deleted from the interval trees relating to those rays. Then the previously described routine COMPUTE REFLECTIONS IN LF can be called, in relation to objects marked as being in receipt of unshot energy.

Figure 23 is a flow diagram showing steps of the procedure designed to allow an object to be added to a scene rendered into a light field, after light emitters have been activated.

Firstly, in step S19-2, the object is located in the field, and a ray intersecting the object to be added is found. Then, in step S19-4, an interval along the ray is identified, bounded by a so-called second intersection with the object to be added, the direction of potential radiance from that second intersection being to the left. The radiance R currently along that interval is looked up in step S19-6, and the surface normal at the second intersection with the object is found in step S19-8. Rays along which that radiance R is to be propagated are determined in step S19-10, from the BRDF for the object at the point of intersection, and in step S19-12 radiance and unshot radiance are added to the intersections of those rays with the object in accordance with the BRDF. Any objects in receipt of unshot energy are marked in step S19-14.

The interval along the ray corresponding to the inside of the object is identified in step S19-16, and in step S19-18 the radiance therealong is set to zero.

Finally, an interval along the ray is identified in step S19-20, bounded by a so-called first intersection with the object, the direction of potential radiance from that first intersection being to the right. The unshot radiance along that interval is set to be -R in step S19-22, and the object (if any) at the other end of that interval is marked in step S19-24 to be in receipt of unshot energy. The fact that the unshot energy received by the object is "negative" is not relevant; it is only important that there is a change in unshot energy which needs to be processed through the light field.

Then, an enquiry is made in step S19-26 as to whether any further rays are to be considered in relation to the object to be added, and if so, the above steps are repeated. If no rays remain to be considered, the procedure COMPUTE REFLECTIONS IN LF is called in step S19-28 in respect of the objects marked as being in receipt of unshot energy (whether positive or negative), following which the ADD AN OBJECT procedure is completed.

The above two procedures are optional features, which can preferably be called from the user interface 100.

These two procedures can be combined in order to provide a procedure for moving an object. In the combined procedure, the union of the object in its original position and the object in its new position is put under consideration, and the rays intersecting this union are found. This is computationally less expensive than considering the deletion and the addition of the object as separate steps to be applied in turn, since many rays intersected by the object in its first position will also be placed under consideration when dealing with the object in its second position.

The embodiment is particularly advantageous in that it is capable of providing a globally illuminated scene which can be amended by adding, deleting or moving an object in the scene without the need to recalculate the illumination of the entire scene.

Further alternative means of listing the T-Intersections could be provided. For example, an array could be defined for each ray and the T-Intersections could be loaded into this array by t-value. This has the disadvantage of needing to choose a maximum number of intersections along a ray in advance.

Alternatively, the T-Intersections could be stored in a standard linked list, or a doubly-linked list so that it is particularly easy to insert new elements or to delete elements from the list. The disadvantage of this is that there would be linear search time for any particular element, compared to the logarithmic search time required for the binary tree method.

As another alternative, it would be possible to divide the ray into N equal segments. If N is large (say 1000) then any t value is approximated by an index into a particular segment of the ray. Hence, a one dimensional array of T-Intersections, indexed by the index number of the segment corresponding to the intersection, could be used. This has the advantage of constant look-up time (so it is faster than the binary tree method for large number of intersections) but the disadvantage of approximation and memory requirements (since most of the entries in the array would be null). For example, suppose that N = 1000, but that there are only twenty T-Intersections along a given ray. In that case, 980 of the possible entries in the array for that ray would be empty.

The memory disadvantages of the alternative set out above can be overcome in at least two different ways. The first way is to use a run length encoding method. In that case, the storage would be in the form of the number of null entries, followed by the actual non-null entries, and so on throughout the array. However, the look-up time for that array would be non-constant depending on the number and location of non-null entries of the array.

The second way of improving the final alternative set out above is by packing many possible representations into words, rather than considering them as single array entries. For example, if N = 1024 ($2^{32}$), 1024 entries of "0" and "1" can be represented by 32 unsigned integers. Hence, instead of having an array of 1024 potential T-Intersections, an array of 32 unsigned integers, each initialised to zero, is provided. This is less memory intensive. Associated with each such integer is an ordered list of those particular T-Intersections that correspond to "1" entries in the word. So, given a particular t-value, the closest segment in the representation can be found. The quotient of the index of the segment divided by 32 will give a particular array element in which the t-value is located. The remainder of the index of the segment divided by 32 will identify the particular bit that must be set to 1 to represent this t-value. Finally, the T-Intersection can be stored in a linked list associated with this particular integer.

It will be appreciated that the techniques described above are computationally relatively more expensive when considering diffuse reflectors than when considering specular reflectors. That is because diffuse reflection produces a very large number of reflected rays from a single incident ray. If a diffuse reflector is included in a scene and dealt with according to the method described above, the level of computation can become prohibitive. Therefore, the following procedure has been devised with a view to significantly reducing the level of computation required for considering diffuse reflectors within a scene.

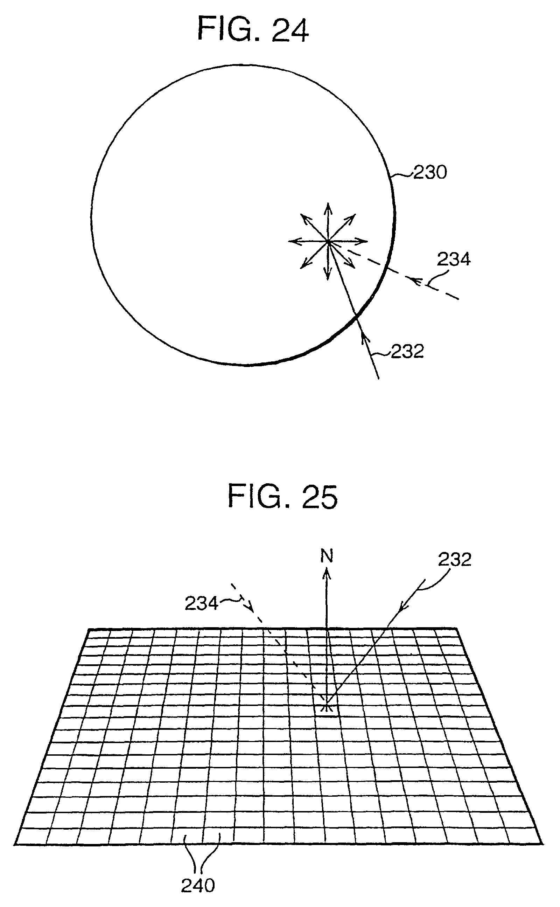

For example, Figure 24 shows a perfectly diffusely reflecting object 230, a surface of which is intersected by first and second rays 232, 234 of a light field as described above. The two rays 232, 234 also intersect another body (not shown) which is a light emitter. The two rays 232, 234 intersect a surface of the diffusely reflecting object 230 substantially at the same point.

Therefore, when considering the receipt of unshot energy by the object, and consequent reflection of light, according to the previously described method the first ray 232 is considered and its intersection with the diffuse reflector 230 is identified. Once the intersection has been found, reflected rays are identified through the hemisphere centred at the intersection and defined by the region bounded by the plane tangential to the surface of the object at the intersection. Radiance and unshot radiance are applied to those reflected rays. Thereafter, the second ray 234 is considered in the same way. However, since the intersection of the second ray 234 with the diffuse reflector is substantially the same as the intersection of the first ray 232 with the diffuse reflector, many, if not all, of the reflected rays in respect of the second incident ray will be the same as those for the first incident ray.

The following method has been devised with a view to reducing the amount of computational effort required in transmitting radiance resultant at a diffusely reflective surface.

Figure 25 shows a schematic diagram of a portion of the surface of the diffuse reflector 230. By way of explanation of the method, the portion of the surface has been divided into a grid comprising a plurality of elements 240. The two incident rays 232, 234 are illustrated as intersecting the object surface within one particular element 240. Once the first ray intersection has been found, instead of reflecting the ray immediately, the energy associated with that incident ray is accumulated with respect to that element 240. Then, when the second incident ray 234 is calculated as intersecting within the same element, the energy associated with that ray is also accumulated in respect of that element 240. This step results in elements of the surface having accumulated energy associated therewith. The accumulation of energy is carried out according to a weighted sum of terms. Each term represents energy received from a different ray. The weighting of each term is determined with respect to the angle of incidence of the incident ray on the object surface, and the properties of the surface as defined by the BRDF for the surface. In particular, a ray incident or an object at a very acute angle to its surface may be more or less absorbed than one normal to the surface, depending on the nature of the surface.

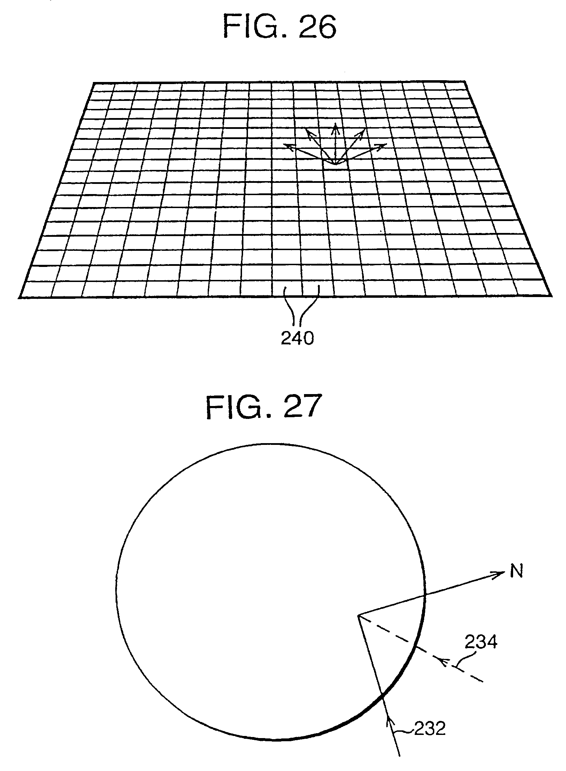

Figure 26 illustrates the same portion of the object surface, in which a step is illustrated which sends radiance onto rays identified as being in reflection directions from the surface element 240. In this step, the accumulated energy for the surface element 240 is reflected to all identified reflected rays from the surface element 240. In that way, the computationally expensive reflected energy calculation is carried out only once per surface element 240. Therefore, the level of computation required for calculating diffuse reflection can be reduced.

Accumulated energy for an element 240 is stored in an additional field within the structure of the T-intersection associated with that element and relating to a ray of the light field substantially coincident with the surface normal of the object surface at that element of the surface. Practically, it is not possible to add the field only to the set of T-intersections corresponding to surface normals, and so the field is included as part of the structure of the T-intersection data structure. For all T-intersections the accumulated energy field is initialised to zero. For all but the T-intersections corresponding with surface normals, the accumulated energy field will remain set to zero. Therefore, as shown in Figure 27, the T-intersection associated with the ray coincident with the surface normal N at the point of intersection of the incident rays 232, 234 has stored therein the accumulated energy related to the radiance of the incident ray.

Thereafter, the accumulated energy is released onto the reflected rays identified in accordance with the BRDF for the object at that point.

By storing information relating to accumulated energy per element 240 in a part of the T-intersection data structure, one particular advantage of the specific embodiment of the invention is maintained. That is, there is no data held with respect to objects in the scene, only in terms of intersections.

The embodiment has several applications, some of which have been identified throughout the description.

Other applications will now be described.

Firstly, a model of a building can be rendered into the light field, and illuminated in a desired manner, to verify the quality of an architectural design. The light field data could be conveyed from an architect to a client by a signal, so that the client can review the architect's design. Moreover, lighting can be designed within that rendered building, for use in the production of artistic works, such as exhibitions, stage plays, or film sets.

Secondly, the ability to interchange views and view characteristics enables the use of the apparatus in the design of a sequence of shots for a television or film production. The invention would be suitable to simulate, in advance of construction thereof, the appearance of a film set under various layout and lighting conditions, and with different types of camera lens.

Thirdly, the light field is a digitally encoded representation of a scene, through representation of the light within the scene. A digital encoding is ideal for compression and subsequent transmission, for instance, for broadcast television. A local set top box, hardwired to decode the transmitted digital encoding and capable of extracting images from the light field defined thereby could be used to display games, or other entertainment to people in their homes. The digital encoding could also be transmitted across the Internet.

Fourthly, in the case that two images are provided of views of the same light field, those two images can be transmitted to a head mounted display. In that way, stereoscopic images can be formed, which can provide a highly immersive virtual reality environment.

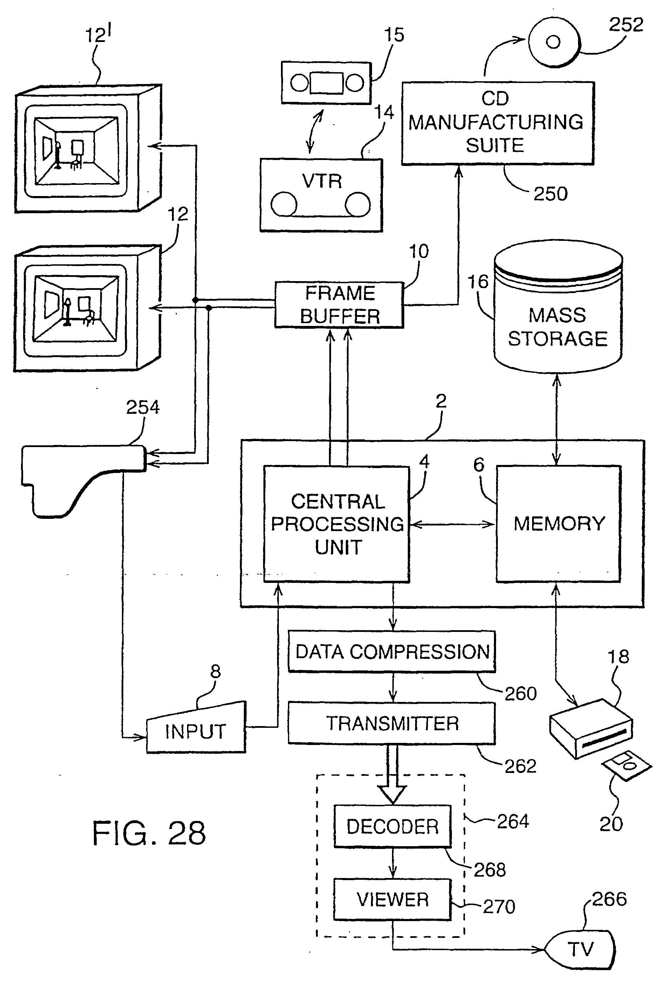

In Figure 28, a block diagram is shown of an image processing apparatus having all of the components of the image processing apparatus illustrated in Figure 1.

However, in this case, the central processing unit 4 is operable to produce two images of the light field embodied therein. Those two images are produced by two viewers within the light field, having parallel principal optical axes a suitable interpupillary distance apart, which interpupillary distance can be adjusted by a user.

The images produced at those viewers are delivered to the frame buffer 10 from the central processing unit 4. Coupled with the frame buffer 10 is a CD manufacturing suite 250 operable to produce compact discs 252 on which are stored encoded data relating to images delivered from the frame buffer 10. In that way, sequences of images from a light field can be stored on compact disks for viewing later on suitable viewing apparatus.

A head mounted display (HMD) 254 is provided, and is operable to receive both sequences of images from the frame buffer 10. A second VDU 12' is provided, and the two sequences of images can be displayed on those two VDU's 12, 12'.

In this case, the input means 8 can include a manual input device, such as is used commonly in virtual reality applications. In that way, progress of the user through the virtual reality environment can be controlled by the user through manipulation of the manual input device, and the two images produced by the central processing unit 4 can be adjusted accordingly. Moreover, the interpupillary distance can be measured within the HMD 254, and that measurement can be supplied to the input 8. That interpupillary distance can be translated into the distance between the optical axis of the two viewers within the light field defined in the central processing unit 4 which produce the two images for display in the HMD 254.

The CPU 4 is further coupled to a data compressor 260 which is adapted to receive data relating to the definition of the light field in the CPU 4 and compressing according to a suitable compression algorithm. The data compressor 260 is coupled to a transmitter 262 operable to receive compressed data from the data compressor 260, and to transmit that data by modulation on electromagnetic carrier radiation. The transmitted data is received by a receiver 264 which is in practice implemented as a set top box for a television 266. The receiver 264 comprises a decoder 268, capable of receiving transmitted data and returning it to its uncompressed state, to retrieve the data defining the light field. The data defining the light field is then transferred to a viewer 270 of the receiver 264 which is of a similar construction to the viewer 104 illustrated in Figure 13 of the drawings. In that way, a definition of a 3D environment can be transmitted to a receiver for manipulation by a user.

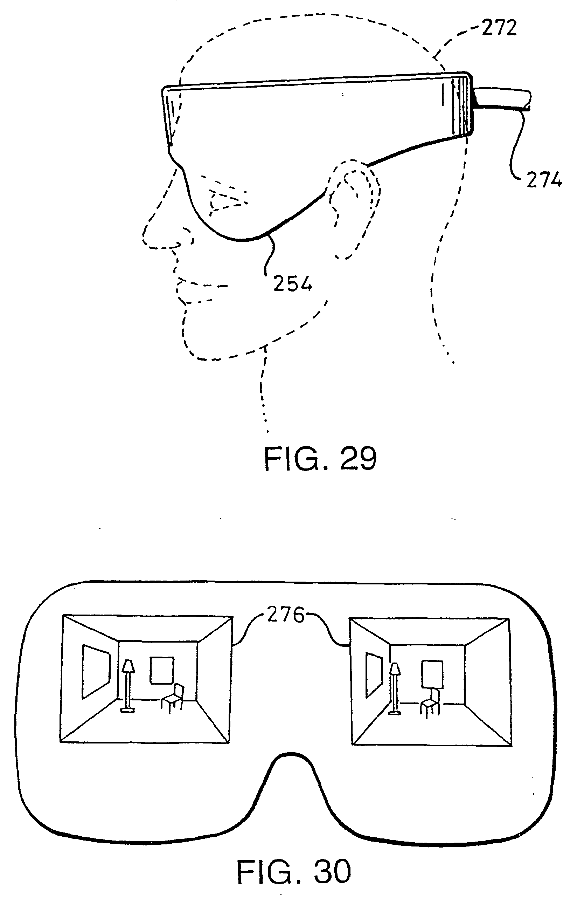

With reference to Figure 29, the HMD 254 consists of a visor suitable to be placed over a user's head 272. A cable 274 connects the HMD 254 to the image processing apparatus previously described.

The HMD 254 conventionally comprises two display units 276 (as illustrated in Figure 30) on which the previously described stereoscopic images can be projected.

The described embodiment is particularly suitable for viewing an environment in stereo, since there is little computational effort involved in creating an image from a light field which has already been constructed. Therefore, two views of the same light field can be created without excessive computation. The viewers can be altered in response to monitoring the angle of gaze of the eye of the user, using monitoring means incorporated into the head mounted display 254, to establish objects within the scene which are of interest to the user. In that way, those objects can be brought into focus.

Furthermore, the invention is not limited to the representation of light propagation in a scene. Heat and sound also constitute forms of energy which can be represented as radiating from sources, and so the representation of the propagation of those forms of energy could also be accomplished by the above described technique. In fact, additional fields could be included for heat and/or sound data, in the T-intersection data structure, beyond the existing radiance and unshot radiance fields. In accordance with the invention, heat and unshot heat fields could be added, as could sound and unshot sound fields.

The embodiment can be used for dynamic sources of light, heat and/or sound, since the radiance value at a particular T-intersection can be computed as a function of a nominal source intensity, until the actual source intensity is set. When the actual intensity is set, the actual radiance value at that T-intersection can be ascertained. Therefore, in the case of a field being used for sound propagation determination, propagation may be calculated as a function of a nominal sound intensity, and a received sound intensity can be calculated thereafter by computing the output of that function given a desired sound source intensity.

## Claims

1. Computer apparatus for processing data to model energy propagation within a three dimensional scene (22), the apparatus comprising:

   means (4, s1-2) for defining a three dimensional environment for containing the three dimensional scene (22);
   means (4, s2-2) for defining a plurality of predetermined discrete energy propagation pathways (72) in a plurality of directions within the defined three dimensional environment, which pathways are independent of any defined energy receiver (104,270);
   means (4, s1-4) for creating the three dimensional scene (22) within the three dimensional environment by locating objects (42) and energy sources (40) within said three dimensional environment;
   means (112) for determining intersections between said predetermined pathways (72) and said objects (42) and energy sources (40) within said three dimensional environment;
   means (116) for calculating propagation of energy along said predetermined pathways (72) in accordance with said objects and energy sources and the intersections determined by said determining means;
   means (4, s15-2) for defining an energy receiver (104, 270) within said three dimensional environment;
   means (4, s15-4) for identifying which of said predetermined pathways intersect said energy receiver (104, 270); and
   means (4, s15-8) for calculating energy received by said energy receiver (104, 270) within said three dimensional environment in accordance with the calculated energy propagation along the identified predetermined pathways (72) which intersect said energy receiver (104, 270).

2. Apparatus in accordance with claim 1 wherein the energy calculating means (4, s15-8) is operable to calculate an energy magnitude value on the basis of energy received by the energy receiver (104, 270).

3. Apparatus in accordance with claim 1 wherein the means (4, s15-2) for defining an energy receiver (104, 270) is operable to locate a viewing plane (82) within said environment.

4. Apparatus in accordance with claim 3 wherein the energy calculating means (4, s15-8) is operable to determine, for each identified pathway that intersects said viewing plane (82), an angle of incidence of the pathway with said viewing plane (82), and to generate image data in accordance with the determined angles of incidence.

5. Apparatus in accordance with any preceding claim wherein the means for defining said plurality of predetermined discrete energy propagation pathways (72) is operable to define a plurality of subsets of pathways (70), the pathways of each subset being parallel to each other and having a different orientation to the pathways of the other subsets.

6. Apparatus in accordance with claim 5 wherein the means (4, s1-2) for defining said pathways (72) is operable to define said subsets (70) such that each subset of pathways includes parallel pathways (72) arranged in a rectangular array.

7. Apparatus in accordance with claim 5 or claim 6 wherein said means (4, s1-2) for defining said pathways (72) includes indexing means (4, s3-6) for indexing subsets of pathways (70) in accordance with the direction of the pathways of each subset.

8. Apparatus in accordance with claim 7 wherein the indexing means (4, s3-6) is operable to index subsets (70) in accordance with spherical coordinates relative to a reference plane.

9. Apparatus in accordance with claim 8 wherein the means (4, s1-2) for defining said pathways (72) is operable to define a larger number of pathways in directions at smaller angles to the reference plane than are defined in directions at larger angles to the reference plane, such that the distribution of pathway directions within the three dimensional environment is substantially uniform.

10. Apparatus in accordance with claim 9 wherein the means (4, s1-2) for defining said pathways (72) is operable to define pathways (72) such that the number of pathways defined in directions at a particular angle to the reference plane is substantially proportional to the complement of said particular angle.

11. Apparatus in accordance with any preceding claim wherein the means (112) for determining intersections is operable to store, for each determined intersection, information relating to the identity of the associated pathway and the object that the pathway intersects.

12. Apparatus in accordance with claim 11 wherein the means (112) for determining intersections is operable to store, for each determined intersection, information defining energy propagation at that intersection.

13. Apparatus in accordance with any preceding claim wherein the energy propagation calculating means (116) is operable to process energy propagation information for a pathway with an intersection with an object, to identify one or more pathways on to which energy is to be propagated from said intersecting pathway, and to generate energy propagation information for said identified pathway or pathways.

14. Apparatus for generating data representing a three dimensional scene (22), the apparatus comprising:

means (4, s1-2) for defining a three dimensional environment for containing the three dimensional scene (22) within which energy propagation is to be represented;
means (4, s1-2) for defining a plurality of predetermined discrete energy propagation pathways (72) in a plurality of directions within the defined three dimensional environment, which pathways are independent of any defined viewpoint;
means (4, s1-4) for creating the three dimensional scene (22) within the three dimensional environment by locating objects (42) and energy sources (40) within said three dimensional environment; and
means (112) for determining intersections between said predetermined pathways (72) and said objects (42) and energy sources (40) within said three dimensional environment.

15. Apparatus in accordance with claim 14 wherein the means (4, s1-2) for defining said pathways comprises means for defining a plurality of subsets of pathways (70), the pathways of each subset being parallel to each other and having a different orientation to the pathways of the other subsets.

16. Apparatus in accordance with claim 15 wherein the means (4, s1-2) for defining said pathways (72) is operable to define said subsets (70) such that each subset of pathways includes parallel pathways (72) arranged in a rectangular array.

17. Apparatus in accordance with claim 15 or claim 16 wherein said means (4, s1-2) for defining said pathways (72) includes indexing means (4, s3-6) for indexing subsets of pathways (70) in accordance with the direction of the pathways of each subset.

18. Apparatus in accordance with claim 17 wherein the indexing means (4, s3-6) is operable to index subsets (70) in accordance with spherical coordinates relative to a reference plane.

19. Apparatus in accordance with claim 18 wherein the means (4, s1-2) for defining said pathways (72) is operable to define an environment which comprises a larger number of pathways in directions at smaller angles to the reference plane than are defined in directions at larger angles to the reference plane, such that the distribution of pathway directions within the three dimensional environment is substantially uniform.

20. Apparatus in accordance with claim 19 wherein the means (4, s1-2) for defining said pathways (72) is operable to define pathways (72) such that the number of pathways defined in directions at a particular angle to the reference plane is substantially proportional to the complement of said particular angle.

21. Apparatus in accordance with any one of claims 14 to 20 wherein the means (112) for determining intersections is operable to store, for each determined intersection, information relating to the identity of the associated pathway and the object that the pathway intersects.

22. Apparatus in accordance with claim 21, further comprising means (116) for calculating data defining propagation of energy along said predetermined pathways (72) in accordance with said objects and energy sources and the intersections determined by said determining means (112) and wherein the means (112) for determining intersections is operable to store, for each determined intersection, information defining energy propagation at that intersection.

23. Apparatus in accordance with claim 22 wherein the energy propagation calculating means (116) is operable to process energy propagation information for a pathway with an intersection with an object, to identify one or more pathways on to which energy is to be propagated from said intersecting pathway, and to generate energy propagation information for said identified pathway or pathways.

24. Apparatus for analysing energy propagation within a three dimensional scene (22), comprising:

means (4, 104) for receiving data defining a three dimensional environment for containing the three dimensional scene (22);
means (4, 104) for receiving data defining a plurality of predetermined discrete energy propagation pathways (72) in a plurality of directions within the defined three dimensional environment, which pathways are independent of any defined energy receiver;
means (4, 104) for receiving data defining the three dimensional scene (22) within the three dimensional environment by locating objects and energy sources within the three dimensional environment;
means (4, 104) for receiving data identifying intersections between said pathways (72) and said objects (42) and said energy sources (40) within said three dimensional environment;
means (4, 104) for receiving data defining propagation of energy along said pathways (72);
means (4, s15-2) for defining an energy receiver (104, 270) within said three dimensional environment;
means (4, s15-4) for identifying which of said predetermined pathways intersect said energy receiver (104, 270); and
means (4, s15-8) for calculating energy received by said energy receiver (104, 270) in accordance with the energy propagated along the identified predetermined pathways (72) which intersect said energy receiver (104, 270).

25. Apparatus in accordance with claim 24, wherein the means for receiving data defining said plurality of predetermined discrete energy propagation pathways (72) is operable to receive data defining a plurality of subsets (70) of pathways, the pathways of each subset being parallel to each other and having a different orientation to the pathways of the other subsets.

26. Apparatus in accordance with claim 24 or claim 25 wherein the energy calculating means (4, s15-8) is operable to calculate an energy magnitude value on the basis of energy received by the energy receiver (104, 270).

27. Apparatus in accordance with any one of claims 24 to 26 wherein the means (4, s15-2) for defining an energy receiver (104, 270) is operable to locate a viewing plane (82) within said environment.

28. Apparatus in accordance with claim 27 wherein the energy calculating means (4, s15-8) is operable to determine, for each identified pathway that intersects said viewing plane (82), an angle of incidence of the pathway with said viewing plane (82), and to generate image data in accordance with the determined angles of incidence.

29. A method of processing data to model energy propagation within a three dimensional scene (22), the method comprising the steps of:

defining (s1-2) a three dimensional environment for containing the three dimensional scene (22);
defining (s1-2) a plurality of predetermined discrete energy propagation pathways (72) in a plurality of directions within the defined three dimensional environment, which pathways are independent of any defined energy receiver;
creating (s1-4) the three dimensional scene within the three dimensional environment by locating objects (42) and energy sources (40) within said three dimensional environment;
determining (s1-4) intersections between said predetermined pathways (72) and said objects (42) and energy sources (40);

calculating (s1-6, s1-8) data defining the propagation of energy along said predetermined pathways (72) in accordance with said objects and energy sources and the intersections determined by said determining means;

defining (s15-2) an energy receiver (104, 270) at a position in said three dimensional environment;

identifying (s15-4) which of said predetermined pathways (72) intersect said energy receiver (104, 270); and

calculating (s15-8) energy received by said energy receiver (104, 270) in accordance with the calculated energy propagation along the identified predetermined pathways which intersect said energy receiver (104, 270).

30. A method in accordance with claim 29 wherein the energy calculating step (s15-8) includes calculating an energy magnitude value on the basis of energy received by the energy receiver.

31. A method in accordance with claim 29 wherein the step of receiving energy (s15-6) includes locating a viewing plane (82) within said environment.

32. A method in accordance with claim 31 wherein the energy calculating step (s15-8) includes determining, for each identified pathway that intersects said viewing plane (82), an angle of incidence of the pathway with said viewing plane (82), and generating image data in accordance with the determined angles of incidence.

33. A method in accordance with any one of claims 29 to 32 wherein the step of defining (s1-2) said plurality of predetermined discrete energy propagation pathways (72) comprises the step of defining a plurality of subsets of pathways (70), the pathways of each subset being parallel to each other and having a different orientation to the pathways of the other subsets.

34. A method in accordance with claim 33 wherein the step of defining (s1-2) said pathways (72) includes defining each said subset of pathways to include parallel pathways arranged in a rectangular array.

35. A method in accordance with claim 33 or claim 34 wherein the step of defining (s1-2) said pathways (72) includes indexing (s3-6) the subsets of pathways (70) in accordance with the direction of the pathways of each subset.

36. A method in accordance with claim 35 wherein the step of indexing (s3-6) includes indexing subsets (70) in accordance with spherical coordinates relative to a reference plane.

37. A method in accordance with claim 36 wherein the step of defining (s1-2) said pathways (72) defines a larger number of pathways in directions at smaller angles to the reference plane than are defined in directions at larger angles to the reference plane, such that the distribution of pathway directions within the three dimensional environment is substantially uniform.

38. A method in accordance with claim 37 wherein the step of defining (s1-2) said pathways (72) defines the number of pathways in directions at a particular angle to the reference plane substantially proportional to the complement of said particular angle.

39. A method in accordance with any one of claims 29 to 38 wherein the step of determining (s1-4) intersections includes the step of storing, for each determined intersection, information relating to the identity of the associated pathway and the object that the pathway intersects.

40. A method in accordance with any one of claims 29 to 39 wherein the step of calculating (s1-6, s1-8) energy propagation includes processing energy propagation information for a pathway with an intersection with an object, identifying one or more pathways on to which energy is to be propagated from said intersecting pathway, and generating energy propagation information for said identified pathway or pathways.

41. A method of generating data representing a three dimensional scene (22), the method comprising:

defining (s1-2) a three dimensional energy propagation environment for containing the three dimensional scene (22) within which energy propagation is to be represented;

defining (s1-2) a plurality of predetermined discrete energy propagation pathways (72) in a plurality of directions within the defined three dimensional environment, which pathways are independent of any defined viewpoint;

creating (s1-4) the three dimensional scene (22) within the three dimensional environment by locating objects (42) and energy sources (40) within said three dimensional environment; and

determining (s1-4) intersections between said predetermined pathways (72) and said objects (42) and energy sources (40) within said three dimensional environment.

42. A method in accordance with claim 41 wherein the step of defining (s1-2) said pathways (72) comprises defining a plurality of subsets of pathways (70), the pathways of each subset being parallel to each other and having a different orientation to the pathways of the other subsets.

43. A method in accordance with claim 42 wherein the step of defining (s1-2) said pathways (72) includes defining each said subset of pathways to include parallel pathways arranged in a rectangular array.

44. A method in accordance with claim 42 or claim 43 wherein the step of defining (s1-2) said pathways (72) includes indexing (s3-6) subsets of pathways (70) in accordance with the direction of the pathways of each subset.

45. A method in accordance with claim 44 wherein the indexing step (s3-6) includes indexing subsets (70) in accordance with spherical coordinates relative a reference plane.

46. A method in accordance with claim 45 wherein the step of defining (s1-2) said pathways (72) comprises defining a larger number of pathways in directions at smaller angles to the reference plane than are defined in directions at larger angles to the reference plane, such that the distribution of pathway directions within the three dimensional environment is substantially uniform.

47. A method in accordance with claim 46 wherein the step of defining (s1-2) said pathways (72) comprises defining a number of pathways in directions at a particular angle to the reference plane is substantially proportional to the complement of said particular angle.

48. A method in accordance with any one of claims 41 to 47 wherein the step of determining (s1-4) intersections includes the step of storing, for each determined intersection, information relating to the identity of the associated pathway and the object that the pathway intersects.

49. A method according to claim 48, further comprising the step of calculating (s1-6, s1-8) data defining propagation of energy along said predetermined pathways (72) in accordance with said objects and energy sources and the intersections determined in said determining step and wherein said determining step stores, for each determined intersection, information defining energy propagation at the intersection.

50. A method in accordance with claim 49 wherein the step of calculating (s1-6, s1-8) energy propagation includes processing energy propagation information for a pathway with an intersection with an object, identifying one or more pathways on to which energy is to be propagated from said intersecting pathway, and generating energy propagation information for said identified pathway or pathways.

51. A method of analysing energy propagation within a three dimensional scene (22), comprising:

receiving and storing data defining a three dimensional environment for containing a three dimensional scene (22);
receiving data defining a plurality of predetermined discrete energy propagation pathways (72) in a plurality of directions within the defined three dimensional environment, which pathways are independent of any defined energy receiver;
receiving data defining the three dimensional scene (22) within the three dimensional environment obtained by locating objects and energy sources within said three dimensional environment;
receiving data identifying intersections between said pathways and said objects and said energy sources within said three dimensional environment;
receiving data defining propagation of energy along said pathways (72);
positioning (s15-2) an energy receiver (104, 270) within said three dimensional environment;
identifying (s15-4) which of said predetermined pathways (72) intersect said energy receiver (104, 270); and
calculating (s15-8) energy received by said energy receiver (104, 270) in accordance with the energy propagated along the identified predetermined pathways (72) which intersect said energy receiver (104, 270).

52. A method in accordance with claim 51, wherein the step of receiving data defining said plurality of predetermined discrete energy propagation pathways (72) is operable to receive data defining a plurality of subsets (70) of pathways, the pathways of each subset being parallel to each other and having a different orientation to the pathways of other subsets.

53. A method in accordance with claim 51 or claim 52 wherein the energy calculating step (s15-8) includes calculating an energy magnitude value on the basis of energy received by the energy receiver (104, 270).

54. A method in accordance with any one of claims 51 to 53 wherein the step (s15-2) of positioning an energy receiver (104, 270) includes locating a viewing plane (82) within said environment.

55. A method in accordance with claim 54 wherein the energy calculating step (s15-8) includes determining, for each identified pathway that intersects said viewing plane (82), an angle of incidence of the pathway with said viewing plane (82), and generating image data in accordance with the determined angles of incidence.

56. A computer storage medium storing processor executable instructions operable to configure a computer apparatus to perform the method of at least one of claims 29 to 55.

57. A signal carrying processor executable instructions operable to configure a computer apparatus to perform the method of at least one of claims 29 to 55.

58. A method in accordance with at least one of claims 32 and 55 including the steps of generating a signal conveying image data generated by said image data generating step and recording the signal either directly or indirectly.

59. A method in accordance with claim 49, including the steps of generating a signal conveying information defining said pathways (72), intersections of said pathways (72) and propagation of energy along said pathways (72) and recording the signal either directly or indirectly.

60. A method in accordance with claim 59, including the step of performing the method of at least one of claims 51 to 55 on information conveyed on said recorded signal.

**Patentansprüche**

1. Computergerät zum Verarbeiten von Daten, um die Energieausbreitung innerhalb eines dreidimensionalen Beobachtungsraums (22) zu modellieren, wobei das Gerät aufweist:

   eine Einrichtung (4, s1-2) zum Definieren einer dreidimensionalen Umgebung, die den dreidimensionalen Beobachtungsraum (22) enthält,
   eine Einrichtung (4, s2-2) zum Definieren mehrerer vorbestimmter diskreter Energieausbreitungspfade (72) in mehreren Richtungen innerhalb der definierten dreidimensionalen Umgebung, wobei die Pfade unabhängig von irgendeinem definierten Energieempfänger (104, 270) sind,
   eine Einrichtung (4, s1-4) zum Erzeugen des dreidimensionalen Beobachtungsraums (22) innerhalb der dreidimensionalen Umgebung, indem Objekte (42) und Energiequellen (40) innerhalb der dreidimensionalen Umgebung lokalisiert werden,
   eine Einrichtung (112) zum Bestimmen von Überschneidungen der vorbestimmten Pfade (72) mit den Objekten (42) und Energiequellen (40) innerhalb der dreidimensionalen Umgebung,
   eine Einrichtung (116) zum Berechnen der Energieausbreitung längs der vorbestimmten Pfade (72) gemäß der Objekte und Energiequellen und der durch die Bestimmungseinrichtung bestimmten Überschneidungen,
   eine Einrichtung (4, s15-2) zum Definieren eines Energieempfängers (104, 270) innerhalb der dreidimensionalen Umgebung,
   eine Einrichtung (4, s15-4) zum Feststellen welcher der vorbestimmten Pfade den Energieempfänger (104, 270) schneidet, und
   eine Einrichtung (4, s15-8) zum Berechnen der durch den Energieempfänger (104, 270) innerhalb der dreidimensionalen Umgebung empfangenen Energie gemäß der berechneten Energieausbreitung längs des festgestellten vorbestimmten Pfads (72), der den Energieempfänger (104, 270) schneidet.

2. Gerät nach Anspruch 1, wobei die Energieberechnungseinrichtung (4, s15-8) dazu betreibbar ist, einen Energiestärkewert auf Grundlage der durch den Energieempfänger (104, 270) empfangenen Energie zu berechnen.

3. Gerät nach Anspruch 1, wobei die Einrichtung (4, s 15-2) zum Definieren eines Energieempfängers (104, 270) dazu betreibbar ist, eine Sichtebene (82) innerhalb der Umgebung zu lokalisieren.

4. Gerät nach Anspruch 3, wobei die Energieberechnungseinrichtung (4, s15-8) dazu betreibbar ist, für jeden festgestellten Pfad, der die Sichtebene (82) schneidet, einen Pfadeinfallswinkel mit der Sichtebene (82) zu bestimmen und Bilddaten gemäß den bestimmten Einfallswinkeln zu erzeugen.

5. Gerät nach einem der vorstehenden Ansprüche, wobei die Einrichtung zum Definieren der mehreren vorbestimmten diskreten Energieausbreitungspfade (72) dazu betreibbar ist, mehrere Untergruppen von Pfaden (70) zu definieren, wobei die Pfade jeder Untergruppe zueinander parallel sind und eine zu den Pfaden der anderen Untergruppen verschiedene Orientierung aufweisen.

6. Gerät nach Anspruch 5, wobei die Einrichtung (4, s1-2) zum Definieren der Pfade (72) dazu betreibbar ist, die Untergruppen (70) so zu definieren, daß jede Pfaduntergruppe parallele Pfade (72) aufweist, die in einem rechtwinkligen Feld angeordnet sind.

7. Gerät nach Anspruch 5 oder 6, wobei die Einrichtung (4, s1-2) zum Definieren der Pfade (72) eine Indexeinrichtung (4, s3-6) zum Indizieren von Pfaduntergruppen (70) gemäß der Richtung der Pfade jeder Untergruppe aufweist.

8. Gerät nach Anspruch 7, wobei die Indexeinrichtung (4, s3-6) dazu betreibbar ist, die Untergruppen (70) gemäß den sphärischen Koordinaten relativ zu einer Referenzebene zu indizieren.

9. Gerät nach Anspruch 8, wobei die Einrichtung (4, s1-2) zum Definieren der Pfade (72) dazu betreibbar ist, eine größere Anzahl von Pfaden in Richtungen, die kleinere Winkel zu der Referenzebene einschließen, als Pfade in Richtungen, die größere Winkel zu der Referenzebene einschließen, zu definieren, so daß die Verteilung von Pfadrichtungen innerhalb der dreidimensionalen Umgebung im wesentlichen gleichmäßig ist.

10. Gerät nach Anspruch 9, wobei die Einrichtung (4, s1-2) zum Definieren der Pfade (72) dazu betreibbar ist, die Pfade (72) so zu definieren, daß die Anzahl der in Richtungen mit bestimmten Winkeln zu der Referenzebene definierten Pfade im wesentlichen proportional zu dem Komplement des jeweiligen Winkels ist.

11. Gerät nach einem der vorstehenden Ansprüche, wobei die Einrichtung (112) zum Bestimmen der Überschneidungen dazu betreibbar ist, für jede bestimmte Überschneidung Informationen bezüglich der Identität des zugehörigen Pfads und des Objekts, das von dem Pfad geschnitten wird, zu speichern.

12. Gerät nach Anspruch 11, wobei die Einrichtung (112) zum Bestimmen von Überschneidungen dazu betreibbar ist, für jede bestimmte Überschneidung Informationen zu speichern, die die Energieausbreitung an dieser Überschneidung definieren.

13. Gerät nach einem der vorstehenden Ansprüche, wobei die Energieausbreitungs-Berechnungseinrichtung (116) dazu betreibbar ist, Energieausbreitungsinformationen für einen Pfad mit einer Überschneidung mit einem Objekt zu verarbeiten, um einen oder mehrere Pfade festzustellen, auf denen sich Energie von dem damit schneidenden Pfad ausbreiten soll, und um Energieausbreitungsinformationen für den oder die festgestellten Pfad bzw. Pfade zu erzeugen.

14. Gerät zum Erzeugen von einen dreidimensionalen Beobachtungsraum (22) darstellenden Daten, wobei das Gerät aufweist:

eine Einrichtung (4, s1-2) zum Definieren einer dreidimensionalen Umgebung, die den dreidimensionalen Beobachtungsraum (22) enthält, innerhalb dem die Energieausbreitung darzustellen ist,
eine Einrichtung (4, s1-2) zum Definieren mehrerer vorbestimmter diskreter Energieausbreitungspfade (72) in mehreren Richtungen innerhalb der definierten dreidimensionalen Umgebung, wobei die Pfade unabhängig von irgendeinem definierten Standpunkt sind,
eine Einrichtung (4, s1-4) zum Erzeugen des dreidimensionalen Beobachtungsraums (22) innerhalb der dreidimensionalen Umgebung, indem Objekte (42) und Energiequellen (40) innerhalb der dreidimensionalen Umgebung lokalisiert werden, und
eine Einrichtung (112) zum Bestimmen von Überschneidungen der vorbestimmten Pfade (72) mit den Objekten (42) und Energiequellen (40) innerhalb der dreidimensionalen Umgebung.

**15.** Gerät nach einem der vorstehenden Ansprüche, wobei die Einrichtung (4, s1-2) zum Definieren der Pfade eine Einrichtung zum Definieren mehrere Untergruppen von Pfaden (70) aufweist, wobei die Pfade jeder Untergruppe zueinander parallel sind und eine zu den Pfaden der anderen Untergruppen verschiedene Orientierung aufweisen.

**16.** Gerät nach Anspruch 15, wobei die Einrichtung (4, s1-2) zum Definieren der Pfade (72) dazu betreibbar ist, die Untergruppen (70) so zu definieren, daß jede Pfaduntergruppe parallele Pfade (72) aufweist, die in einem rechtwinkligen Feld angeordnet sind.

**17.** Gerät nach Anspruch 15 oder 16, wobei die Einrichtung (4, s1-2) zum Definieren der Pfade (72) eine Indexeinrichtung (4, s3-6) zum Indizieren von Pfaduntergruppen (70) gemäß der Richtung der Pfade jeder Untergruppe aufweist.

**18.** Gerät nach Anspruch 17, wobei die Indexeinrichtung (4, s3-6) dazu betreibbar ist, die Untergruppen (70) gemäß den sphärischen Koordinaten relativ zu einer Referenzebene zu indizieren.

**19.** Gerät nach Anspruch 18, wobei die Einrichtung (4, s1-2) zum Definieren der Pfade (72) dazu betreibbar ist, eine Umgebung zu definieren, die eine größere Anzahl von Pfaden in Richtungen, die kleinere Winkel zu der Referenzebene einschließen, als Pfade in Richtungen, die größere Winkel zu der Referenzebene einschließen, aufweist, so daß die Verteilung von Pfadrichtungen innerhalb der dreidimensionalen Umgebung im wesentlichen gleichmäßig ist.

**20.** Gerät nach Anspruch 19, wobei die Einrichtung (4, s1-2) zum Definieren der Pfade (72) dazu betreibbar ist, die Pfade (72) so zu definieren, daß die Anzahl der in Richtungen mit bestimmten Winkeln zu der Referenzebene definierten Pfade im wesentlichen proportional zu dem Komplement des jeweiligen Winkels ist.

**21.** Gerät nach einem der Ansprüche 14 bis 20, wobei die Einrichtung (112) zum Bestimmen der Überschneidungen dazu betreibbar ist, für jede bestimmte Überschneidung Informationen bezüglich der Identität der zugehörigen Pfade und des Objekts, das von dem Pfad geschnitten wird, zu speichern.

**22.** Gerät nach Anspruch 21, ferner mit einer Einrichtung (116) zum Berechnen von Daten, die die Energieausbreitung längs der vorbestimmten Pfade (72) gemäß den Objekten und Energiequellen sowie den Überschneidungen, die von der Bestimmungseinrichtung bestimmt wurden, definieren, und wobei die Einrichtung (112) zum Bestimmen der Überschneidungen dazu betreibbar ist, für jede bestimmte Überschneidung Informationen zu speichern, die die Energieausbreitung an der Überschneidung definieren.

**23.** Gerät nach Anspruch 22, wobei die Energieausbreitungs-Berechnungseinrichtung (116) dazu betreibbar ist, Energieausbreitungsinformationen für einen Pfad mit einer Überschneidung mit einem Objekt zu verarbeiten, um einen oder mehrere Pfade festzustellen, auf denen sich Energie von dem damit schneidenden Pfad ausbreiten soll, und um Energieausbreitungsinformationen für den oder die festgestellten Pfad bzw. Pfade zu erzeugen.

**24.** Gerät zum Analysieren der Energieausbreitung innerhalb eines dreidimensionalen Beobachtungsraums (22), mit
einer Einrichtung (4, 104) zum Empfangen von Daten, die eine dreidimensionale Umgebung definieren, die den dreidimensionalen Beobachtungsraum (22) enthält,
einer Einrichtung (4, 104) zum Empfangen von Daten, die mehrere vorbestimmte diskrete Energieausbreitungspfade (72) in mehreren Richtungen innerhalb der definierten dreidimensionalen Umgebung definieren, wobei die Pfade unabhängig von irgendeinem definierten Energieempfänger sind,
einer Einrichtung (4, 104) zum Empfangen von Daten, die den dreidimensionalen Beobachtungsraum (22) innerhalb der dreidimensionalen Umgebung definieren, indem Objekte und Energiequellen innerhalb der dreidimensionalen Umgebung lokalisiert werden,
einer Einrichtung (4, 104) zum Empfangen von Daten, die Überschneidungen der Pfade (72) mit den Objekten (42) und den Energiequellen (40) innerhalb der dreidimensionalen Umgebung feststellen,
einer Einrichtung (4, 104) zum Empfangen von Daten, die die Energieausbreitung längs der Pfade (72) definieren,
einer Einrichtung (4, s 15-2) zum Definieren eines Energieempfängers (104, 270) innerhalb der dreidimensionalen Umgebung,
einer Einrichtung (4, s15-4) zum Feststellen, welcher der vorbestimmten Pfade den Energieempfänger (104, 270) schneidet, und
einer Einrichtung (4, s15-8) zum Berechnen der durch den Energieempfänger (104, 270) empfangenen Energie gemäß der längs der festgestellten vorbestimmten Pfade (72), die den Energieempfänger (104, 270) schneiden, ausgebreiteten Energie.

25. Gerät nach Anspruch 24, wobei die Einrichtung zum Empfangen von Daten, die die mehreren vorbestimmten diskreten Energieausbreitungspfade (72) definieren, dazu betreibbar ist, Daten zu empfangen, die mehrere Untergruppen von Pfaden (70) definieren, wobei die Pfade jeder Untergruppe zueinander parallel sind und eine zu den Pfaden der anderen Untergruppen verschiedene Orientierung aufweisen.

26. Gerät nach Anspruch 24 oder 25, wobei die Energieberechnungseinrichtung (4, s15-8) dazu betreibbar ist, einen Energiestärkewert auf Grundlage der durch den Energieempfänger (104, 270) empfangenen Energie zu berechnen.

27. Gerät nach einem der Ansprüche 24 bis 26, wobei die Einrichtung (4, s15-2) zum Definieren eines Energieempfängers (104, 270) dazu betreibbar ist, eine Sichtebene (82) innerhalb der Umgebung zu lokalisieren.

28. Gerät nach Anspruch 27, wobei die Energieberechnungseinrichtung (4, s15-8) dazu betreibbar ist, für jeden identifizierten Pfad, der die Sichtebene (82) schneidet, einen Einfallswinkel des Pfads in der Sichtebene (82) zu bestimmen und Bilddaten gemäß den bestimmten Einfallswinkeln zu erzeugen.

29. Verfahren zum Verarbeiten von Daten, um die Energieausbreitung innerhalb eines dreidimensionalen Beobachtungsraums (22) zu modellieren, wobei das Verfahren die folgenden Schritte aufweist:

Definieren (s1-2) einer dreidimensionalen Umgebung, die den dreidimensionalen Beobachtungsraum (22) enthält,
Definieren (s1-2) mehrerer vorbestimmter diskreter Energieausbreitungspfade (72) in mehreren Richtungen innerhalb der dreidimensionalen Umgebung, wobei die Pfade unabhängig von irgendeinem definierten Energieempfänger sind,
Erzeugen (s1-2) des dreidimensionalen Beobachtungsraums innerhalb der dreidimensionalen Umgebung, indem Objekte (42) und Energiequellen (40) innerhalb der dreidimensionalen Umgebung lokalisiert werden,
Bestimmen (s1-4) von Überschneidungen der vorbestimmten Pfade (72) mit den Objekten (42) und Energiequellen (40),
Berechnen (s1-6, s1-8) von Daten, die die Energieausbreitung längs der vorbestimmten Pfade (72) gemäß den Objekten und Energiequellen sowie Überschneidungen definieren, die durch die Bestimmungseinrichtung bestimmt wurden,
Definieren (s15-2) eines Energieempfängers (104, 270) an einer Stelle in der dreidimensionalen Umgebung,
Feststellen (s15-4), welche vorbestimmten Pfade (72) den Energieempfänger (104, 270) schneiden, und
Berechnen (s15-8) der durch den Energieempfänger (104, 270) empfangenen Energie gemäß der berechneten Energieausbreitung längs des festgestellten vorbestimmten Pfads, der den Energieempfänger (104, 270) schneidet.

30. Verfahren nach Anspruch 29, wobei in dem Energieberechnungsschritt (s15-8) ein Energiestärkewert auf Grundlage der durch den Energieempfänger empfangenen Energie berechnet wird.

31. Verfahren nach Anspruch 29, wobei in dem Energieempfangsschritt (s15-6) eine Sichtebene (82) innerhalb der Umgebung lokalisiert wird.

32. Verfahren nach Anspruch 31, wobei in dem Energieberechnungsschritt (s15-8) für jeden festgestellten Pfad, der die Sichtebene (82) schneidet, ein Pfadeinfallswinkel mit der Sichtebene (82) bestimmt wird und Bilddaten gemäß den bestimmten Einfallswinkeln erzeugt werden.

33. Verfahren nach einem der Ansprüche 29 bis 32, wobei der Schritt des Definierens (s1-2) der mehreren vorbestimmten diskreten Energieausbreitungspfade (72) den Schritt des Definierens mehrerer Untergruppen von Pfaden (70) einschließt, wobei die Pfade jeder Untergruppe zueinander parallel sind und eine zu den Pfaden der anderen Untergruppen verschiedene Orientierung aufweisen.

34. Verfahren nach Anspruch 33, wobei in dem Schritt des Definierens (s1-2) der Pfade (72) jede Pfaduntergruppe so definiert wird, daß sie parallele Pfade (72) aufweist, die in einem rechtwinkligen Feld angeordnet sind.

**35.** Verfahren nach Anspruch 33 oder 34, wobei der Schritt des Definierens (s1-2) der Pfade (72) den Schritt des Indizierens (s3-6) von Pfaduntergruppen (70) gemäß der Richtung der Pfade jeder Untergruppe einschließt.

**36.** Verfahren nach Anspruch 35, wobei in dem Schritt des Indizierens (s3-6) Untergruppen (70) gemäß den sphärischen Koordinaten relativ zu einer Referenzebene indiziert werden.

**37.** Verfahren nach Anspruch 36, wobei der Schritt des Definierens (s1-2) der Pfade (72) eine größere Anzahl von Pfaden in Richtungen definiert, die kleinere Winkel zu der Referenzebene einschließen, als Pfade in Richtungen, die größere Winkel zu der Referenzebene einschließen, so daß die Verteilung von Pfadrichtungen innerhalb der dreidimensionalen Umgebung im wesentlichen gleichmäßig ist.

**38.** Verfahren nach Anspruch 37, wobei der Schritt des Definierens (s1-2) der Pfade (72) die Anzahl der Pfade in Richtungen mit bestimmten Winkeln zu der Referenzebene im wesentlichen proportional zu dem Komplement des jeweiligen Winkels definiert.

**39.** Verfahren nach einem der Ansprüche 29 bis 38, wobei der Schritt des Bestimmens (s1-4) der Überschneidungen den Schritt des Speicherns von Informationen bezüglich der Identität des zugehörigen Pfads und des Objekts, das von dem Pfad geschnitten wird, für jede bestimmte Überschneidung einschließt.

**40.** Verfahren nach einem der Ansprüche 29 bis 39, wobei in dem Schritt des Berechnens (s1-6, s1-8) der Energieausbreitung Energieausbreitungsinformationen für einen Pfad mit einer Überschneidung mit einem Objekt verarbeitet werden, um einen oder mehrere Pfade festzustellen, auf denen sich Energie von dem damit schneidenden Pfad ausbreiten soll, und um Energieausbreitungsinformationen für den oder die festgestellten Pfad bzw. Pfade zu erzeugen.

**41.** Verfahren zum Erzeugen von Daten, die einen dreidimensionalen Beobachtungsraum (22) darstellen, wobei
eine dreidimensionale Energieausbreitungsumgebung, die den dreidimensionalen Beobachtungsraum (22) enthält, innerhalb dem Energieausbreitung darzustellen ist, definiert (s1-2) wird,
mehrere vorbestimmte diskrete Energieausbreitungspfade (72) in mehreren Richtungen innerhalb der definierten dreidimensionalen Umgebung definiert (s1-2) werden, wobei die Pfade unabhängig von irgendeinem definierten Standpunkt sind,
der dreidimensionale Beobachtungsraum (22) innerhalb der dreidimensionalen Umgebung erzeugt (s1-4) wird, indem Objekte (42) und Energiequellen (40) innerhalb der dreidimensionalen Umgebung lokalisiert werden, und
Überschneidungen der vorbestimmten Pfade (72) mit den Objekten (42) und Energiequellen (40) innerhalb der dreidimensionalen Umgebung bestimmt (s1-4) werden.

**42.** Verfahren nach Anspruch 41, wobei in dem Schritt des Definierens (s1-2) der Pfade (72) mehrere Untergruppen von Pfaden (70) definiert werden, wobei die Pfade jeder Untergruppe zueinander parallel sind und eine zu den Pfaden der anderen Untergruppen verschiedene Orientierung aufweisen.

**43.** Verfahren nach Anspruch 42, wobei in dem Schritt des Definierens (s1-2) der Pfade (72) die Untergruppen (70) so definiert werden, daß jede Pfaduntergruppe parallele Pfade (72) aufweist, die in einem rechtwinkligen Feld angeordnet sind.

**44.** Verfahren nach Anspruch 42 oder 43, wobei in dem Schritt des Definierens (s1-2) der Pfade (72) Pfaduntergruppen (70) gemäß der Richtung der Pfade jeder Untergruppe indiziert (s3-6) werden.

**45.** Verfahren nach Anspruch 44, wobei in dem Schritt des Indizierens (s3-6) die Untergruppen (70) gemäß den sphärischen Koordinaten relativ zu einer Referenzebene indiziert werden.

**46.** Verfahren nach Anspruch 45, wobei in dem Schritt des Definierens (s1-2) der Pfade (72) eine größere Anzahl von Pfaden in Richtungen definiert wird, die kleinere Winkel zu der Referenzebene einschließen, als Pfade in Richtungen, die größere Winkel zu der Referenzebene einschließen, so daß die Verteilung von Pfadrichtungen innerhalb der dreidimensionalen Umgebung im wesentlichen gleichmäßig ist.

**47.** Verfahren nach Anspruch 46, wobei in dem Schritt des Definierens (s1-2) der Pfade (72) die Anzahl der in Richtungen mit bestimmten Winkeln zu der Referenzebene definierten Pfade im wesentlichen proportional zu dem Komplement des jeweiligen Winkels definiert wird.

**48.** Verfahren nach einem der Ansprüche 41 bis 47, wobei der Schritt des Bestimmens (s1-4) von Überschneidungen den Schritt des Speichems von Informationen bezüglich der Identität der zugehörigen Pfade und des Objekts, das von dem Pfad geschnitten wird, für jede bestimmte Überschneidung einschließt.

**49.** Verfahren nach Anspruch 48, ferner mit dem Schritt des Berechnens (s1-6, s1-8) von Daten, die die Energieausbreitung längs der vorbestimmten Pfade (72) gemäß den Objekten und Energiequellen sowie den Überschneidungen, die in dem Bestimmungsschritt bestimmt wurden, definieren, und wobei der Bestimmungsschritt für jede bestimmte Überschneidung Informationen speichert, die die Energieausbreitung an der Überschneidung definieren.

**50.** Verfahren nach Anspruch 49, wobei in dem Schritt des Berechnens (s1-6, s1-8) der Energieausbreitung Energieausbreitungsinformationen für einen Pfad mit einer Überschneidung mit einem Objekt verarbeitet wird, um einen oder mehrere Pfade festzustellen, auf denen sich Energie von dem damit schneidenden Pfad ausbreiten soll, und um Energieausbreitungsinformationen für den oder die festgestellten Pfad bzw. Pfade zu erzeugen.

**51.** Verfahren zum Analysieren der Energieausbreitung innerhalb eines dreidimensionalen Beobachtungsraums (22), wobei

Daten empfangen werden, die eine dreidimensionale Umgebung definieren, die den dreidimensionalen Beobachtungsraum (22) enthält,

Daten empfangen werden, die mehrere vorbestimmte diskrete Energieausbreitungspfade (72) in mehreren Richtungen innerhalb der definierten dreidimensionalen Umgebung definieren, wobei die Pfade unabhängig von irgendeinem definierten Energieempfänger sind,

Daten empfangen werden, die den dreidimensionalen Beobachtungsraum (22) innerhalb der dreidimensionalen Umgebung definieren, indem Objekte und Energiequellen innerhalb der dreidimensionalen Umgebung lokalisiert werden,

Daten empfangen werden, die Überschneidungen der Pfade mit den Objekten und den Energiequellen innerhalb der dreidimensionalen Umgebung feststellen,

Daten empfangen werden, die Energieausbreitung längs der Pfade (72) definieren,

ein Energieempfänger (104, 270) innerhalb der dreidimensionalen Umgebung positioniert wird,

festgestellt (s15-4) wird, welcher der vorbestimmten Pfade den Energieempfänger (104, 270) schneidet, und

die durch den Energieempfänger (104, 270) empfangene Energie gemäß der Energie berechnet (s15-8) wird, die sich längs der festgestellten vorbestimmten Pfade (72) ausbreitet, die den Energieempfänger (104, 270) schneiden.

**52.** Verfahren nach Anspruch 51, wobei der Schritt des Emfangens von Daten, die die mehreren vorbestimmten diskreten Energieausbreitungspfade (72) definieren, dazu betreibbar ist, Daten zu empfangen, die mehrere Untergruppen von Pfaden (70) definieren, wobei die Pfade jeder Untergruppe zueinander parallel sind und eine zu den Pfaden der anderen Untergruppen verschiedene Orientierung aufweisen.

**53.** Verfahren nach Anspruch 51 oder 52, wobei in dem Energieberechnungsschritt (s15-8) ein Energiestärkewert auf Grundlage der durch den Energieempfänger (104, 270) empfangenen Energie berechnet wird.

**54.** Verfahren nach einem der Ansprüche 51 bis 53, wobei in dem Schritt des Positionierens (s15-2) eines Energieempfängers (104, 270) eine Sichtebene (82) innerhalb der Umgebung lokalisiert wird.

**55.** Verfahren nach Anspruch 54, wobei in dem Energieberechnungsschritt (s15-8) für jeden identifizierten Pfad, der die Sichtebene (82) schneidet, ein Einfallswinkel des Pfads in der Sichtebene (82) bestimmt und Bilddaten gemäß den bestimmten Einfallswinkeln erzeugt werden.

**56.** Computerspeichermedium, das prozessorausführbare Instruktionen speichert, die dazu betreibbar sind, ein Computergerät zu konfigurieren, um das Verfahren nach wenigstens einem der Ansprüche 29 bis 55 auszuführen.

**57.** Signal mit prozessorausführbaren Instruktionen, das dazu ausgelegt ist, ein Computergerät zu konfigurieren, um das Verfahren nach wenigstens einem der Ansprüche 29 bis 55 auszuführen.

**58.** Verfahren gemäß wenigstens einem der Ansprüche 32 und 55, wobei ein Signal mit Bilddaten erzeugt wird, die durch den Schritt des Erzeugens von Bilddaten erzeugt wurden, und das Signal entweder direkt oder indirekt aufgezeichnet wird.

59. Verfahren nach Anspruch 49, wobei ein Signal erzeugt wird, das Informationen trägt, die die Pfade (72), Schnittstellen der Pfade (72) und Energieausbreitung längs der Pfade (72) definiert, und das Signal entweder direkt oder indirekt aufgezeichnet wird.

60. Verfahren nach Anspruch 59, wobei das Verfahren nach wenigstens einem der Ansprüche 51 bis 55 auf die von dem aufgezeichneten Signal getragene Information angewendet wird.

## Revendications

1. Appareil informatique pour traiter des données afin de modéliser la propagation d'énergie dans une scène tridimensionnelle (22), l'appareil comprenant :

   un moyen (4, s1-2) pour définir un environnement tridimensionnel devant contenir la scène tridimensionnelle (22) ;
   un moyen (4, s2-2) pour définir une pluralité de trajets de propagation d'énergie discrets prédéterminés (72) dans une pluralité de directions à l'intérieur de l'environnement tridimensionnel défini, lesquels trajets sont indépendants de tout récepteur d'énergie défini (104, 270) ;
   un moyen (4, s1-4) pour créer la scène tridimensionnelle (22) à l'intérieur de l'environnement tridimensionnel en plaçant des objets (42) et des sources d'énergie (40) à l'intérieur dudit environnement tridimensionnel ;
   un moyen (112) pour déterminer des intersections entre lesdits trajets prédéterminés (72) et lesdits objets (42) et lesdites sources d'énergie (40) à l'intérieur dudit environnement tridimensionnel ;
   un moyen (116) pour calculer la propagation d'énergie le long desdits trajets prédéterminés (72) en conformité avec lesdits objets et lesdites sources d'énergie et les intersections déterminées par ledit moyen de détermination ;
   un moyen (4, s15-2) pour définir un récepteur d'énergie (104, 270) à l'intérieur dudit environnement tridimensionnel ;
   un moyen (4, s15-4) pour identifier lesquels desdits trajets prédéterminés ont une intersection avec ledit récepteur d'énergie (104, 270) ; et
   un moyen (4, s15-8) pour calculer l'énergie reçue par ledit récepteur d'énergie (104, 270) à l'intérieur dudit environnement tridimensionnel en fonction de la propagation d'énergie le long desdits trajets prédéterminés identifiés (72) qui ont une intersection avec ledit récepteur d'énergie (104, 270).

2. Appareil selon la revendication 1, dans lequel le moyen de calcul d'énergie (4, s15-8) a pour fonction de calculer une valeur d'amplitude d'énergie sur la base de l'énergie reçue par le récepteur d'énergie (104, 270).

3. Appareil selon la revendication 1, dans lequel le moyen (4, s15-2) pour définir un récepteur d'énergie (104, 270) a pour fonction de placer un plan d'observation (82) à l'intérieur dudit environnement.

4. Appareil selon la revendication 3, dans lequel le moyen de calcul d'énergie (4, s15-8) a pour fonction de déterminer, pour chaque trajet identifié qui a une intersection avec ledit plan d'observation (82), un angle d'incidence du trajet avec ledit plan d'observation (82), et de générer des données d'image en fonction des angles d'incidence déterminés.

5. Appareil selon l'une quelconque des revendications précédentes, dans lequel le moyen de définition de ladite pluralité de trajets de propagation d'énergie discrets prédéterminés (72) a pour fonction de définir une pluralité de sous-ensembles de trajets (70), les trajets de chaque sous-ensemble étant parallèles les uns aux autres et ayant une orientation différente des trajets des autres sous-ensembles.

6. Appareil selon la revendication 5, dans lequel le moyen (4, s1-2) de définition desdits trajets (72) a pour fonction de définir lesdits sous-ensembles (70) de façon que chaque sous-ensemble de trajets contienne des trajets parallèles (72) agencés selon un quadrillage rectangulaire.

7. Appareil selon la revendication 5 ou 6, dans lequel ledit moyen (4, s1-2) de définition desdits trajets (72) comporte un moyen d'indexation (4, s3-6) pour indexer des sous-ensembles de trajets (70) en fonction de la direction des trajets de chaque sous-ensemble.

8. Appareil selon la revendication 7, dans lequel le moyen d'indexation (4, s3-6) a pour fonction d'indexer des sous-ensembles (70) en fonction de coordonnées sphériques par rapport à un plan de référence.

9. Appareil selon la revendication 8, dans lequel le moyen (4, s1-2) de définition desdits trajets (72) a pour fonction de définir un plus grande nombre de trajets dans des directions formant de plus petits angles par rapport au plan de référence que ceux qui sont définis dans des directions formant de plus grands angles par rapport au plan de référence, de façon que la distribution des directions de trajets à l'intérieur de l'environnement tridimensionnel soit sensiblement uniforme.

10. Appareil selon la revendication 9, dans lequel le moyen (4, s1-2) de définition desdits trajets (72) a pour fonction de définir des trajets (72) de façon que le nombre de trajets définis dans des directions formant un angle particulier par rapport au plan de référence soit sensiblement proportionnel au complément dudit angle particulier.

11. Appareil selon l'une quelconque des revendications précédentes, dans lequel le moyen (112) de détermination d'intersections a pour fonction de stocker, pour chaque intersection déterminée, des informations concernant l'identité du trajet associé et de l'objet avec lequel le trajet a une intersection.

12. Appareil selon la revendication 11, dans lequel le moyen (112) de détermination d'intersections a pour fonction de stocker, pour chaque intersection déterminée, des informations définissant la propagation d'énergie à cette intersection.

13. Appareil selon l'une quelconque des revendications précédentes, dans lequel le moyen de calcul de propagation d'énergie (116) a pour fonction de traiter des informations de propagation d'énergie pour un trajet ayant une intersection avec un objet, d'identifier un ou plusieurs trajets sur lequel de l'énergie doit se propager depuis ledit trajet d'intersection, et de générer des informations de propagation d'énergie pour ledit trajet ou lesdits trajets identifié(s).

14. Appareil pour générer des données représentant une scène tridimensionnelle (22), l'appareil comprenant :

   un moyen (4, s1-2) pour définir un environnement tridimensionnel devant contenir la scène tridimensionnelle (22) à l'intérieur de laquelle la propagation d'énergie doit être représentée ;
   un moyen (4, s1-2) pour définir une pluralité de trajets de propagation d'énergie discrets prédéterminés (72) dans une pluralité de directions à l'intérieur de l'environnement tridimensionnel défini, lesquels trajets sont indépendants d'un point d'observation défini quelconque ;
   un moyen (4, s1-4) pour créer la scène tridimensionnelle (22) à l'intérieur de l'environnement tridimensionnel en plaçant des objets (42) et des sources d'énergie (40) à l'intérieur dudit environnement tridimensionnel ; et
   un moyen (112) pour déterminer des intersections entre lesdits trajets prédéterminés (72) et lesdits objets (42) et des sources d'énergie (40) à l'intérieur dudit environnement tridimensionnel.

15. Appareil selon la revendication 14, dans lequel le moyen (4, s1-2) pour définir lesdits trajets comprend un moyen pour définir une pluralité de sous-ensembles de trajets (70), les trajets de chaque sous-ensemble étant parallèles les uns aux autres et ayant une orientation différente par rapport aux trajets des autres sous-ensembles.

16. Appareil selon la revendication 15, dans lequel le moyen (4, s1-2) de définition desdits trajets (72) a pour fonction de définir lesdits sous-ensembles (70) de façon que chaque sous-ensemble de trajets contienne des trajets parallèles (72) agencés selon un quadrillage rectangulaire.

17. Appareil selon la revendication 15 ou 16, dans lequel ledit moyen (4, s1-2) de définition desdits trajets (72) comporte un moyen d'indexation (4, s3-6) pour indexer des sous-ensembles de trajets (70) en fonction de la direction des trajets de chaque sous-ensemble.

18. Appareil selon la revendication 17, dans lequel le moyen d'indexation (4, s3-6) a pour fonction d'indexer des sous-ensembles (70) en fonction de coordonnées sphériques relatives à un plan de référence.

19. Appareil selon la revendication 18, dans lequel le moyen (4, s1-2) de définition desdits trajets (72) a pour fonction de définir un environnement qui comprend un plus grand nombre de trajets dans des directions formant de plus petits angles par rapport au plan de référence que ceux qui sont définis dans des directions formant de plus grands angles par rapport au plan de référence, de façon que la distribution des directions de trajets à l'intérieur de l'environnement tridimensionnel soit sensiblement uniforme.

20. Appareil selon la revendication 19, dans lequel le moyen (4, s1-2) de définition desdits trajets (72) a pour fonction de définir des trajets (72) de façon que le nombre de trajets définis dans des directions formant un angle particulier par rapport au plan de référence soit sensiblement proportionnel au complément dudit angle particulier.

21. Appareil selon l'une quelconque des revendications 14 à 20, dans lequel le moyen (112) de détermination d'intersections a pour fonction de stocker, pour chaque intersection déterminée, des informations concernant l'identité du trajet associé et de l'objet avec lequel le trajet a une intersection.

22. Appareil selon la revendication 21, comprenant en outre un moyen (116) pour calculer des données définissant la propagation d'énergie le long desdits trajets prédéterminés (72) en fonction desdits objets et de sources d'énergie et les intersections déterminées par ledit moyen de détermination (112) et dans lequel le moyen (112) de détermination d'intersections a pour fonction de stocker, pour chaque intersection déterminée, des informations définissant la propagation d'énergie à ladite intersection.

23. Appareil selon la revendication 22, dans lequel le moyen de calcul de propagation d'énergie (116) a pour fonction de traiter des informations de propagation d'énergie pour un trajet ayant une intersection avec un objet, d'identifier un ou plusieurs trajets sur lesquels de l'énergie doit se propager depuis ledit trajet ayant une intersection, et de générer des informations de propagation d'énergie pour ledit trajet ou lesdits trajets identifié(s).

24. Appareil pour analyser la propagation d'énergie à l'intérieur d'une scène tridimensionnelle (22), comprenant :

   un moyen (4, 104) pour recevoir des données définissant un environnement tridimensionnel devant contenir la scène tridimensionnelle (22) ;
   un moyen (4, 104) pour recevoir des données définissant une pluralité de trajets de propagation d'énergie discrets prédéterminés (72) dans une pluralité de directions à l'intérieur de l'environnement tridimensionnel défini, lesquels trajets sont indépendants de tout récepteur d'énergie défini ;
   un moyen (4, 104) pour recevoir des données définissant la scène tridimensionnelle (22) à l'intérieur de l'environnement tridimensionnel en plaçant des objets et des sources d'énergie à l'intérieur dudit environnement tridimensionnel ;
   un moyen (4, 104) pour recevoir des données identifiant des intersections entre lesdits trajets (72) et lesdits objets (42) et lesdites sources d'énergie (40) à l'intérieur dudit environnement tridimensionnel ;
   un moyen (4, 104) pour recevoir des données définissant la propagation d'énergie le long desdits trajets (72) ;
   un moyen (4, s15-2) pour définir un récepteur d'énergie (104, 270) à l'intérieur dudit environnement tridimensionnel ;
   un moyen (4, s15-4) pour identifier lesquels desdits trajets prédéterminés ont des intersections avec ledit récepteur d'énergie (104, 270) ; et
   un moyen (4, s15-8) pour calculer l'énergie reçue par ledit récepteur d'énergie (104, 270) en fonction de l'énergie s'étant propagée le long des trajets prédéterminés identifiés (72) qui ont des intersections avec ledit récepteur d'énergie (104, 270).

25. Appareil selon la revendication 24, dans lequel le moyen pour recevoir des données définissant ladite pluralité de trajets de propagation d'énergie discrets prédéterminés (72) a pour fonction de recevoir des données définissant une pluralité de sous-ensembles (70) de trajets, les trajets de chaque sous-ensemble étant parallèles les uns aux autres et ayant une orientation différente des trajets des autres sous-ensembles.

26. Appareil selon la revendication 24 ou 25, dans lequel le moyen de calcul d'énergie (4, s15-8) a pour fonction de calculer une valeur d'amplitude d'énergie sur la base de l'énergie reçue par le récepteur d'énergie (104, 270).

27. Appareil selon l'une quelconque des revendications 24 à 26, dans lequel le moyen (4, s15-2) de définition d'un récepteur d'énergie (104, 270) a pour fonction de placer un plan d'observation (82) à l'intérieur dudit environnement.

28. Appareil selon la revendication 27, dans lequel le moyen de calcul d'énergie (4, s15-8) a pour fonction de déterminer, pour chaque trajet identifié ayant une intersection avec ledit plan d'observation (82), un angle d'incidence du trajet avec ledit plan d'observation (82) et de générer des données d'image en fonction des angles d'incidence déterminés.

**29.** Procédé de traitement de données pour modéliser la propagation d'énergie à l'intérieur d'une scène tridimensionnelle (22), le procédé comprenant les étapes consistant à :

définir (s1-2) un environnement tridimensionnel devant contenir la scène tridimensionnelle (22) ;

définir (s1-2) une pluralité de trajets de propagation d'énergie discrets prédéterminés (72) dans une pluralité de directions à l'intérieur de l'environnement tridimensionnel défini, lesquels trajets sont indépendants de tout récepteur d'énergie défini ;

créer (s1-4) la scène tridimensionnelle à l'intérieur de l'environnement tridimensionnel en plaçant des objets (42) et des sources d'énergie (40) à l'intérieur dudit environnement tridimensionnel ;

déterminer (s1-4) des intersections entre lesdits trajets prédéterminés (72) et lesdits objets (42) et lesdites sources d'énergie (40) ;

calculer (s1-6, s1-8) des données définissant la propagation d'énergie le long desdits trajets prédéterminés (72) en fonction desdits objets, des sources d'énergie et des interactions déterminées par ledit moyen de détermination ;

définir (s15-2) un récepteur d'énergie (104, 270) à une position dans ledit environnement tridimensionnel ;

identifier (s15-4) lesquels desdits trajets prédéterminés (72) ont une intersection avec ledit récepteur d'énergie (104, 270) ; et

calculer (s15-8) l'énergie reçue par ledit récepteur d'énergie (104, 270) en fonction de la propagation d'énergie calculée le long des trajets prédéterminés identifiés qui ont une intersection avec ledit récepteur d'énergie (104, 270).

**30.** Procédé selon la revendication 29, dans lequel l'étape de calcul d'énergie (s15-8) comprend le calcul d'une valeur d'amplitude d'énergie sur la base de l'énergie reçue par le récepteur d'énergie.

**31.** Procédé selon la revendication 29, dans lequel l'étape de réception d'énergie (s15-6) comprend le placement d'un plan d'observation (82) à l'intérieur dudit environnement.

**32.** Procédé selon la revendication 31, dans lequel l'étape de calcul d'énergie (s15-8) consiste à déterminer, pour chaque trajet identifié qui a une intersection avec ledit plan d'observation (82), un angle d'incidence du trajet avec ledit plan d'observation (82) et à générer des données d'image en fonction des angles d'incidence déterminés.

**33.** Procédé selon l'une quelconque des revendications 29 à 32, dans lequel l'étape consistant à définir (s1-2) ladite pluralité de trajets de propagation d'énergie discrets prédéterminés (72) comprend l'étape consistant à définir une pluralité de sous-ensembles de trajets (70), les trajets de chaque sous-ensemble étant parallèles les uns aux autres et ayant une orientation différente des trajets par rapport aux trajets des autres sous-ensembles.

**34.** Procédé selon la revendication 33, dans lequel l'étape consistant à définir (s1-2) lesdits trajets (72) consiste à définir chaque sous-ensemble de trajets de façon qu'il contienne des trajets parallèles disposés selon un quadrillage rectangulaire.

**35.** Procédé selon la revendication 33 ou la revendication 34, dans lequel l'étape consistant à définir (s1-2) lesdits trajets (72) consiste à indexer (s3-6) les sous-ensembles de trajets (70) en fonction de la direction des trajets de chaque sous-ensemble.

**36.** Procédé selon la revendication 35, dans lequel l'étape d'indexation (s3-6) consiste à indexer les sous-ensembles (70) en fonction de coordonnées sphériques par rapport à un plan de référence.

**37.** Procédé selon la revendication 36, dans lequel l'étape consistant à définir (s1-2) lesdits trajets (72) définit un plus grand nombre de trajets dans des directions formant de plus petits angles par rapport au plan de référence que ceux qui sont définis dans des directions formant de plus grands angles par rapport au plan de référence, de façon que la distribution des directions de trajets à l'intérieur de l'environnement tridimensionnel soit sensiblement uniforme.

**38.** Procédé selon la revendication 37, dans lequel l'étape consistant à définir (s1-2) lesdits trajets (72) définit le nombre de trajets dans des directions formant un angle particulier par rapport au plan de référence de façon qu'il soit sensiblement proportionnel au complément dudit angle particulier.

**39.** Procédé selon l'une quelconque des revendications 29 à 38, dans lequel l'étape consistant à déterminer (s1-4) des intersections comprend l'étape consistant à stocker, pour chaque intersection déterminée, des informations concernant l'identité du trajet associé et de l'objet avec lequel le trajet a une intersection.

40. Procédé selon l'une quelconque des revendications 29 à 39, dans lequel l'étape consistant à calculer (s1-6, s1-8) la propagation d'énergie consiste à traiter des informations de propagation d'énergie pour un trajet ayant une intersection avec un objet, à identifier un ou plusieurs trajets sur lesquels de l'énergie doit être amenée à se propager depuis ledit trajet ayant une intersection, et à générer des informations de propagation d'énergie pour ledit trajet ou lesdits trajets identifié(s).

41. Procédé pour générer des données représentant une scène tridimensionnelle (22), le procédé consistant à :

définir (s1-2) un environnement de propagation d'énergie tridimensionnel devant contenir la scène tridimensionnelle (22) à l'intérieur de laquelle la propagation d'énergie doit être représentée ;
définir (s1-2) une pluralité de trajets de propagation d'énergie discrets prédéterminés (72) dans une pluralité de directions à l'intérieur de l'environnement tridimensionnel défini, lesquels trajets sont indépendants de tout point d'observation défini ;
créer (s1-4) la scène tridimensionnelle (22) à l'intérieur de l'environnement tridimensionnel en plaçant des objets (42) et des sources d'énergie (40) à l'intérieur dudit environnement tridimensionnel ; et
déterminer (s1-4) des intersections entre lesdits trajets prédéterminés (72) et lesdits objets (42) et des sources d'énergie (40) à l'intérieur dudit environnement tridimensionnel.

42. Procédé selon la revendication 41, dans lequel l'étape consistant à définir (s1-2) lesdits trajets (72) consiste à définir une pluralité de sous-ensembles de trajets (70), les trajets de chaque sous-ensemble étant parallèles les uns aux autres et ayant une orientation différente par rapport aux trajets des autres sous-ensembles.

43. Procédé selon la revendication 42, dans lequel l'étape consistant à définir (s1-2) lesdits trajets (72) consiste à définir chaque sous-ensemble de trajets de façon qu'il contienne des trajets parallèles agencés selon un quadrillage rectangulaire.

44. Procédé selon la revendication 42 ou 43, dans lequel l'étape consistant à définir (s1-2) lesdits trajets (72) consiste à indexer (s3-6) des sous-ensembles de trajets (70) en fonction de la direction des trajets de chaque sous-ensemble.

45. Procédé selon la revendication 44, dans lequel l'étape d'indexation (s3-6) consiste à indexer des sous-ensembles (70) en fonction de coordonnées sphériques par rapport à un plan de référence.

46. Procédé selon la revendication 45, dans lequel l'étape consistant à définir (s1-2) lesdits trajets (72) consiste à définir un plus grand nombre de trajets dans des directions formant de plus petits angles par rapport au plan de référence que ceux qui sont définis dans des directions formant de plus grands angles par rapport au plan de référence, de façon que la distribution de directions de trajets à l'intérieur de l'environnement tridimensionnel soit sensiblement uniforme.

47. Procédé selon la revendication 46, dans lequel l'étape consistant à définir (s1-2) lesdits trajets (72) consiste à définir un certain nombre de trajets dans des directions formant un angle particulier par rapport au plan de référence de façon qu'il soit sensiblement proportionnel au complément dudit angle particulier.

48. Procédé selon l'une quelconque des revendications 41 à 47, dans lequel l'étape consistant à déterminer (s1-4) des intersections comprend l'étape consistant à stocker, pour chaque intersection déterminée, des informations concernant l'identité du trajet associé et de l'objet avec lequel le trajet a une intersection.

49. Procédé selon la revendication 48, comprenant en outre l'étape consistant à calculer (s1-6, s1-8) des données définissant la propagation d'énergie le long desdits trajets prédéterminés (72) en fonction desdits objets et desdites source d'énergie et des intersections déterminées lors de ladite étape de détermination et dans lequel ladite étape de détermination stocke, pour chaque intersection déterminée, des informations définissant la propagation d'énergie à l'intersection.

50. Procédé selon la revendication 49, dans lequel l'étape consistant à calculer (s1-6, s1-8) la propagation d'énergie consiste à traiter des informations de propagation d'énergie pour un trajet ayant une intersection avec un objet, à

**EP 1 116 188 B1**

identifier un ou plusieurs trajets sur lequel de l'énergie doit être amenée à se propager depuis ledit trajet ayant une intersection, et à générer des informations de propagation d'énergie pour ledit trajet ou lesdits trajets identifié (s).

51. Procédé pour analyser la propagation d'énergie à l'intérieur d'une scène tridimensionnelle (22), consistant à :

recevoir et stocker des données définissant un environnement tridimensionnel devant contenir une scène tridimensionnelle (22) ;
recevoir des données définissant une pluralité de trajets de propagation d'énergie discrets prédéterminés (72) dans une pluralité de directions à l'intérieur de l'environnement tridimensionnel défini, lesquels trajets sont indépendants de tout récepteur d'énergie défini ;
recevoir des données définissant la scène tridimensionnelle (22) à l'intérieur de l'environnement tridimensionnel obtenu en plaçant des objets et des sources d'énergie à l'intérieur dudit environnement tridimensionnel ;
recevoir des données identifiant des intersections entre lesdits trajets (72) et lesdits objets et lesdites sources d'énergie (40) à l'intérieur dudit environnement tridimensionnel ;
recevoir des données définissant la propagation d'énergie le long desdits trajets (72) ;
positionner (s15-2) un récepteur d'énergie (104, 270) à l'intérieur dudit environnement tridimensionnel ;
identifier (s15-4) lesquels desdits trajets prédéterminés (72) ont une intersection avec ledit récepteur d'énergie (104, 270) ; et
calculer (s15-8) l'énergie reçue par ledit récepteur d'énergie (104, 270) en fonction de l'énergie s'étant propagée le long des trajets prédéterminés identifiés (72) qui ont une intersection avec ledit récepteur d'énergie (104, 270).

52. Procédé selon la revendication 51, dans lequel l'étape consistant à recevoir des données définissant ladite pluralité de trajets de propagation d'énergie discrets prédéterminés (72) a pour fonction de recevoir des données définissant une pluralité de sous-ensembles (70) de trajets, les trajets de chaque sous-ensemble étant parallèles les uns aux autres et ayant une orientation différente par rapport aux trajets d'autres sous-ensembles.

53. Procédé selon la revendication 51 ou 52, dans lequel l'étape consistant à calculer l'énergie (s15-8) consiste à calculer une valeur d'amplitude d'énergie sur la base de l'énergie reçue par le récepteur d'énergie (104, 270).

54. Procédé selon l'une quelconque des revendications 51 à 53, dans lequel l'étape (s15-2) consistant à positionner un récepteur d'énergie (104, 270) consiste à placer un plan d'observation (82) à l'intérieur dudit environnement.

55. Procédé selon la revendication 54, dans lequel l'étape consistant à calculer l'énergie (s15-8) consiste à déterminer, pour chaque trajet identifié qui a une intersection avec ledit plan d'observation (82), un angle d'incidence du trajet par rapport audit plan d'observation (82), et à générer des données d'image en fonction des angles d'incidence déterminés.

56. Support de stockage informatique stockant des instructions exécutables par un processeur ayant pour fonction de configurer un appareil informatique pour qu'il mette en oeuvre le procédé selon au moins l'une des revendications 29 à 55.

57. Signal transportant des instructions exécutables par un processeur ayant pour fonction de configurer un appareil informatique afin qu'il mette en oeuvre le procédé selon au moins l'une des revendications 29 à 55.

58. Procédé selon au moins l'une des revendications 32 et 55, comprenant des étapes consistant à générer un signal transportant des données d'image générées par ladite étape consistant à générer des données d'image et à enregistrer le signal soit directement, soit indirectement.

59. Procédé selon la revendication 49, comprenant les étapes consistant à générer un signal transportant des informations définissant lesdits trajets (72), lesdites intersections desdits trajets (72) et la propagation d'énergie le long desdits trajets (72), et à enregistrer le signal soit directement, soit indirectement.

60. Procédé selon la revendication 59, comprenant l'étape consistant à mettre en oeuvre le procédé selon au moins l'une des revendications 51 à 55 sur des informations transportées par ledit signal enregistré.

# FIG.1

FIG.2A

EP 1 116 188 B1

FIG.2B

*FIG.3A*

72

70

*FIG.3B*

70

φ

*FIG.3C*

70

φ

θ

FIG.4

EP 1 116 188 B1

FIG. 5

FIG. 6

EP 1 116 188 B1

$t_7$   $t_5$   $t_6$   $t_1$   $t_2$   $t_3$   $t_4$   $t_8$

$T_7$   $T_5$   $T_6$   $T_1$   $T_4$   $T_8$

24   40   $T_2$   42   $T_3$   26

FIG. 7

EP 1 116 188 B1

| INDEX | | INTERVAL DATA | INTERVAL DATA | INTERVAL DATA | | | · · · |
|-------|---|---------------|---------------|---------------|---|---|-------|

| t-VALUE | OBJECT | DIRECTION | RADIANCE | UNSHOT RADIANCE |
|---------|--------|-----------|----------|-----------------|

FIG. 8

FIG. 9

FIG. 10

USER INTERFACE — 100

LF COMPUTATION — 102

VIEWER — 104

VDU — 12

FIG. 11

FIG. 12

FIG. 13

START

SET UP THE LF —— S1-2

RENDER OBJECTS INTO LF —— S1-4

ACTIVATE LIGHT EMITTERS IN LF —— S1-6

COMPUTE REFLECTIONS IN LF —— S1-8

STOP

FIG. 14

SET UP THE
LF

DEFINE LIGHT REGION — S3-2

ORIENT LIGHT REGION
WITH NORMALS OF A PAIR
OF OPPOSITE FACES AT
ANGLE φ FROM VERTICAL
AND ANGLE θ FROM
PREDETERMINED
HORIZONTAL — S3-4

NEXT (φ, θ) — S3-10

GENERATE SET OF
EQUISPACED RAYS
PARALLEL WITH SAID
NORMALS — S3-6

ANY MORE
COMBINATIONS OF
φ, θ TO
CHOOSE? — S3-8

YES

NO

RETURN

FIG. 15

FIG. 16

FIG. 17

```
                   ┌─────────────────────┐
                  /  ACTIVATE LIGHT       /
                 /   EMITTERS IN LF      /
                 └─────────────────────┘
                            │
                            ▼
              ┌───────────────────────┐
              │  CONSIDER OBJECT WITH  │─── S7-2
              │   LIGHT EMISSION       │
              │     PROPERTIES         │
              └───────────────────────┘
                            │
                            ▼
              ┌─┬─────────────────────┬─┐
              │ │   FIND RAY          │ │─── S7-4
              │ │ INTERSECTING OBJECT │ │
              │ │ AND INTERSECTION    │ │
              │ │    THEREWITH        │ │
              └─┴─────────────────────┴─┘
                            │
                            ▼
              ┌───────────────────────┐
              │   DEFINE INTERVAL      │─── S7-6
              │   BOUNDED BY           │
              │ INTERSECTION T₁ OF RAY │
              │ WITH OBJECT AND NEXT   │
              │ INTERSECTION T₂ ALONG  │
              │   RAY FROM OBJECT      │
              └───────────────────────┘
                            │
                            ▼
              ┌───────────────────────┐
              │                        │─── S7-8
              │   SET RADIANCE IN T₁   │
              │                        │
              └───────────────────────┘
                            │
                            ▼
```

DEFINE INTERVAL BOUNDED BY INTERSECTION $T_1$ OF RAY WITH OBJECT AND NEXT INTERSECTION $T_2$ ALONG RAY FROM OBJECT — S7-6

SET RADIANCE IN $T_1$ — S7-8

S7-10 — IS RADIANCE IN $T_1$ GREATER THAN THRESHOLD?    NO

YES

SET UNSHOT RADIANCE IN $T_1$ — S7-12

IDENTIFY OBJECT $O_2$ AT $T_2$ — S7-14

(A) (B) (C)          (D)                    (E)

(A) (B) (C) (D) (E)

S7-16

MARK $O_2$ AS HAVING RECEIVED UNSHOT RADIANCE

S7-20

CONSIDER NEXT INTERSECTION

S7-18

ANY MORE INTERSECTIONS OF RAY WITH OBJECT TO CONSIDER?

YES

NO

S7-22

ANY MORE RAYS TO CONSIDER?

YES

NO

S7-24

ANY MORE OBJECTS WITH LIGHT EMISSION PROPERTIES?

YES

NO

RETURN

FIG. 17 (cont)

FIG. 18

COMPUTE
REFLECTIONS
IN LF

S9-2

ARE THERE
ANY OBJECTS
MARKED AS HAVING
RECEIVED UNSHOT
RADIANCE?

NO → RETURN

YES

SELECT MARKED
OBJECT O          S9-4

UNMARK OBJECT O   S9-6

FIND RAY
INTERSECTING OBJECT
AND INTERSECTION
THEREWITH          S9-8

IDENTIFY INTERSECTION $T_2$
OF RAY WITH OBJECT O   S9-10

IDENTIFY INTERSECTION $T_1$
OF RAY WITH ADJACENT
OBJECT               S9-12

DOES $T_1$
HAVE UNSHOT
RADIANCE?         S9-14

NO

YES

(A)          (B)          (C)

56

Ⓐ        Ⓑ   Ⓒ

FIND REFLECTED RAY — S9-16

IDENTIFY INTERSECTIONS $U_1$ WITH OBJECT O AND INTERSECTION $U_2$ WITH NEXT OBJECT $0_2$ — S9-18

IS CHANGE IN RADIANCE IN U1 GREATER THAN THRESHOLD? — S9-20

NO

UPDATE RADIANCE IN $U_1$ — S9-22

MARK $O_2$ AS HAVING RECEIVED UNSHOT RADIANCE — S9-24

SET UNSHOT RADIANCE IN $U_1$ — S9-26

ANY MORE REFLECTED RAYS TO BE CONSIDERED? — S9-28

YES

NO

ANY MORE RAYS TO BE CONSIDERED? — S9-30

YES

NO

*FIG. 18 (cont)*

57

FIND RAY
INTERSECTING
OBJECT AND
INTERSECTION
THERWITH

IS OBJECT
DEFINED IN TERMS
OF PLANE
POLYGONS? — S11-2

NO → Ⓐ

YES

CONSIDER NEW PLANE
POLYGON — S11-4

FIND RAY PASSING
BETWEEN VERTICES OF
POLYGON — S11-6

MARK RAY AS HAVING
BEEN FOUND — S11-8

INTERPOLATE TO FIND
INTERSECTION — S11-10

RETURN

FIG. 19

Ⓐ

DEFINE SMALLEST AXIS
ALIGNED BOUNDING BOX
AROUND OBJECT — S11-12

CONSIDER NEW SIDE OF BOX — S11-14

FIND RAY PASSING BETWEEN
VERTICES OF SIDE OF BOX — S11-16

HAS
RAY BEEN MARKED AS
HAVING PREVIOUSLY
BEEN FOUND? — S11-18

YES

ANY
MORE RAYS TO
BE CONSIDERED
THROUGH SIDE OF
BOX? — S11-20

YES

NO

MARK RAY AS HAVING
BEEN FOUND — S11-22

DOES
RAY PASS
THROUGH
OBJECT? — S11-24

NO

YES

FIND INTERSECTION OF
RAY WITH OBJECT — S11-26

RETURN

FIG. 19 (cont)

OBTAIN
DETAILS OF
INTERSECTS
OF RAYS
WITH OBJECT

S13-2

ANY RAYS
TO BE
CONSIDERED?

NO → RETURN

YES

OBTAIN POSITION OF AN
INTERSECTION OF RAY
WITH OBJECT

S13-4

LOAD INTERSECTION ONTO
BINARY TREE FOR RAY
WITH POSITION OF
INTERSECTION ON RAY,
IDENTITY OF OBJECT,
POTENTIAL DIRECTION OF
RADIANCE, RADIANCE
VALUE (SET TO ZERO) AND
UNSHOT RADIANCE VALUE
(SET TO ZERO)

S13-6

S13-8

ANY MORE
INTERSECTIONS?

YES

NO

FIG. 20

START

REQUEST POSITION AND
SIZE OF APERTURE OF
VIEWER AND STORE INPUT
VALUES — S15-2

IDENTIFY SET OF RAYS
ENTERING APERTURE — S15-4

FOR EACH RAY ENTERING
APERTURE, FIND END
POINT OF RAY ON IMAGE
PLANE — S15-6

MAP RGB CHROMINANCE
OF RAYS INCIDENT ON
IMAGE PLANE — S15-8

PIXELLATE IMAGE PLANE
AND INVERT — S15-10

END

FIG. 21

DELETE AN OBJECT

S17-2 — IDENTIFY RAY INTERSECTING OBJECT TO BE DELETED

S17-4 — IDENTIFY T-INTERSECTION ON IDENTIFIED RAY CARRYING RADIANCE INCIDENT ON OBJECT TO BE DELETED

S17-6 — PUT OUT NEGATIVE RADIANCE ON REFLECTED RAY(S)

S17-8 — PUT OUT POSITIVE RADIANCE ON TRANSMITTED RAY

S17-10 — ANY MORE T-INTERSECTIONS TO BE CONSIDERED?    YES    NO

S17-12 — ANY MORE RAYS TO BE CONSIDERED?    YES    NO

S17-16 — REMOVE T-INTERSECTIONS FOR OBJECT TO BE DELETED

END

FIG. 22

```
                    ┌──────────────────────────┐
                    │     ADD AN OBJECT         │
                    └──────────────────────────┘
                              │
                              ▼
    S19-2 ─────┐    ┌──────────────────────────┐
               │    │  FIND RAY INTERSECTING    │
                    │        OBJECT             │
                    └──────────────────────────┘
                              │
                              ▼
    S19-4 ─────┐    ┌──────────────────────────┐
               │    │ IDENTIFY INTERVAL ALONG RAY│
                    │ WITH SECOND INTERSECTION  │
                    │  BEING WITH OBJECT AND    │
                    │ HAVING DIRECTION = LEFT   │
                    └──────────────────────────┘
                              │
                              ▼
    S19-6 ─────┐    ┌──────────────────────────┐
               │    │ NOTE RADIANCE R ALONG THIS│
                    │        INTERVAL           │
                    └──────────────────────────┘
                              │
                              ▼
    S19-8 ─────┐    ┌──────────────────────────┐
               │    │  FIND NORMAL AT SECOND    │
                    │      INTERSECTION         │
                    └──────────────────────────┘
                              │
                              ▼
    S19-10 ────┐    ┌──────────────────────────┐
               │    │ DETERMINE RAYS ALONG WHICH│
                    │   RADIANCE IS TO BE       │
                    │       PROPAGATED          │
                    └──────────────────────────┘
                              │
                              ▼
    S19-12 ────┐    ┌──────────────────────────┐
               │    │ ADD RADIANCE AND UNSHOT   │
                    │ RADIANCE TO APPROPRIATE   │
                    │ INTERVALS ALONG EACH SUCH │
                    │          RAY              │
                    └──────────────────────────┘
                              │
                              ▼
    S19-14 ────┐    ┌──────────────────────────┐
               │    │ MARK ANY OBJECT(S) AT OTHER│
                    │ END OF INTERVAL(S) AS BEING│
                    │ IN RECEIPT OF UNSHOT ENERGY│
                    └──────────────────────────┘
                              │
                              ▼
    S19-16 ────┐    ┌──────────────────────────┐
               │    │    FIND INTERVAL          │
                    │ CORRESPONDING TO INSIDE OF│
                    │        OBJECT             │
                    └──────────────────────────┘
                              │
                              ▼
    S19-18 ────┐    ┌──────────────────────────┐
               │    │ SET RADIANCE ALONG INTERVAL│
                    │        TO ZERO            │
                    └──────────────────────────┘
                              │
                              ▼
                             (A)                 (B)
```

FIG. 23

Ⓐ                                                    Ⓑ

S19-20 — FIND INTERVAL WITH FIRST INTERSECTION BEING WITH OBJECT AND HAVING DIRECTION = RIGHT

S19-22 — SET UNSHOT RADIANCE TO BE - R

S19-24 — MARK THE OBJECT (IF ANY) AT OTHER END OF INTERVAL TO BE IN RECEIPT OF -VE UNSHOT ENERGY

S19-26 — ANY MORE RAYS TO CONSIDER?    YES

NO

S19-28 — COMPUTE REFLECTIONS IN LF

END

FIG. 23 (cont)

# FIG. 24

# FIG. 25

# FIG. 26

240

# FIG. 27

N

234

232

FIG. 28

FIG. 29

FIG. 30